(19) Europäisches Patentamt
European Patent Office
Office européen des brevets

(11) EP 3 392 059 B1

(12) **EUROPEAN PATENT SPECIFICATION**

(45) Date of publication and mention of the grant of the patent:
**06.11.2019 Bulletin 2019/45**

(21) Application number: **16875174.1**

(22) Date of filing: **02.09.2016**

(51) Int Cl.:
***B60C 5/01*** *(2006.01)* ***B60C 7/00*** *(2006.01)*
***B60C 9/22*** *(2006.01)* ***C08G 69/40*** *(2006.01)*
***B60C 5/00*** *(2006.01)*

(86) International application number:
**PCT/JP2016/075906**

(87) International publication number:
**WO 2017/104188 (22.06.2017 Gazette 2017/25)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2015 JP 2015243287**

(43) Date of publication of application:
**24.10.2018 Bulletin 2018/43**

(73) Proprietor: **Bridgestone Corporation**
**Tokyo 104-8340 (JP)**

(72) Inventor: **TARUTANI, Yasunori**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 3 281 966**
**JP-A- 2011 256 364**
**JP-A- 2014 198 518**
**JP-A- 2014 198 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 392 059 B1

## Description

### Technical Field

The present invention relates to a tire.

### Background Art

Conventionally, as pneumatic tires used in vehicles such as passenger cars, tires in which resin materials, particularly thermoplastic resins, thermoplastic elastomers and the like, are used as materials have been examined from the standpoints of weight reduction, ease of molding, and recyclability. Such thermoplastic polymer materials have many advantages from the standpoint of improving productivity in that, for example, they are inj ection-moldable.

For example, it has been proposed to form a tire frame of a tire from a thermoplastic resin material and to use a polyamide-based thermoplastic elastomer as the thermoplastic resin material (for example, Japanese Patent Application Laid-Open (JP-A) No. 2012-046030). Another known tire is disclosed in JP-2014-198518.

Reference is also made to EP 3281966 A1 which forms state of the art under Article 54(3) EPC.

### SUMMARY OF INVENTION

### Technical Problem

Tires using a thermoplastic polymer material can be produced more easily and at a lower cost than conventional rubber-made tires. However, in the production of a tire using a thermoplastic polymer material, it is demanded to realize performances comparable to those of conventional rubber-made tires while achieving such a high production efficiency. Specifically, it is demanded to realize excellent rim fittability, low-temperature impact resistance and heat resistance in a well-balanced manner.

As a method for attaining low-temperature impact resistance, for example, a method of adjusting a hard segment/soft segment ratio of a thermoplastic elastomer contained in a tire frame may be employed. However, for example, an increase in low-temperature impact resistance by such adjustment of the hard segment/soft segment ratio results in a reduction in heat resistance; therefore, it is not easy to improve all of rim fittability, low-temperature impact resistance, and heat resistance.

In view of the above-described circumstances, an object of one embodiment of the invention is to provide a tire that contains a thermoplastic elastomer and has excellent rim fittability, low-temperature impact resistance, and heat resistance.

### Solution to Problem

[1] A tire comprising: a circular tire frame that comprises a polyamide-based thermoplastic elastomer having a hard segment and a soft segment, the hard segment containing a copolymer of a dicarboxylic acid having from 4 to 12 carbon atoms and a diamine having from 4 to 12 carbon atoms, and the soft segment containing a polyamine; and a reinforcing cord layer that comprises a reinforcing cord member wound around an outer circumferential portion of the tire frame along a tire circumferential direction at an average interval of from 0.4 mm to 3.2 mm in a tire width direction.

### Advantageous Effects of Invention

According to an embodiment of the invention, a tire that contains a thermoplastic elastomer and has excellent rim fittability, low-temperature impact resistance, and heat resistance can be provided.

### BRIEF DESCRIPTION OF DRAWINGS

FIG. 1A is a perspective view illustrating a cross-section taken along the tire width direction of a tire according to a first embodiment of the invention;
FIG. 1B is an enlarged cross-sectional view of a bead portion taken along the tire width direction, which illustrates a state in which a rim is fitted to a tire;
FIG. 2 is a cross-sectional view taken along the tire width direction, which illustrates a state in which a reinforcing cord member is embedded in a crown portion of a tire case (tire frame) of the tire according to the first embodiment

of the invention;

FIG. 3 is a drawing for explaining operations of embedding the reinforcing cord member in the crown portion of the tire case using a cord heating device and rollers;

FIG. 4A is a perspective view illustrating a cross-section taken along the tire width direction of a tire according to a second embodiment of the invention;

FIG. 4B is an enlarged cross-sectional view of a bead portion taken along the tire width direction, which illustrates a state in which a rim is fitted to a tire; and

FIG. 5 is a cross-sectional view taken along the tire width direction, which illustrates the periphery of a reinforcing cord layer of the tire according to the second embodiment of the invention.

DESCRIPTION OF EMBODIMENTS

Specific embodiments of the invention will be described in detail hereinafter. However, it should be noted that the invention is not restricted to the embodiments below but can be carried out with appropriate modification within the scope of the object of the invention.

In the present specification, those numerical ranges that are stated with "to" each denote a range that includes the numerical values stated before and after "to" as the lower and upper limit values, respectively.

The term "step" used herein encompasses not only discrete steps but also those steps which cannot be clearly distinguished from other steps, as long as the intended purpose of the step is achieved.

In the present specification, when reference is made to the amount of a component contained in a composition and there are plural substances corresponding to the component in the composition, the indicated amount of the component means the total amount of the plural substances existing in the composition unless otherwise specified.

The term "thermoplastic elastomer" used herein refers to a copolymer that has a hard segment and a soft segment. Specific examples of a thermoplastic elastomer include copolymers that include a polymer constituting a crystalline high-melting-point hard segment or a high-cohesive-strength hard segment, and a polymer constituting an amorphous low-glass-transition-temperature soft segment. Examples of a thermoplastic elastomer also include those which not only are softened and fluidized as the temperature increases and become relatively hard and strong when cooled, but also exhibit rubber-like elasticity.

Examples of the hard segment include segments having a structure that contains a rigid group (e.g., an aromatic group or an alicyclic group) in the main skeleton, or a structure that allows intermolecular packing by an intermolecular hydrogen bond or $\pi$-$\pi$ interaction. Examples of the soft segment include segments having a structure that contains a long-chain group (e.g., a long-chain alkylene group) in the main chain and a high degree of freedom in molecular rotation and exhibits elasticity.

The term "thermoplastic resin" used herein means a polymer compounds that is softened and fluidized as the temperature increases and thereby assumes a relatively hard and strong state when cooled, but does not have rubber-like elasticity, and the term "thermoplastic resin" does not encompass thermoplastic elastomers.

The term "resin" used herein is a concept that encompasses thermoplastic resins, thermoplastic elastomers and thermosetting resins, but not vulcanized rubbers.

The tire according to one embodiment of the invention includes: a circular tire frame that contains a polyamide-based thermoplastic elastomer having a hard segment and a soft segment, in which the hard segment contains a copolymer of a dicarboxylic acid having from 4 to 12 carbon atoms and a diamine having from 4 to 12 carbon atoms, and the soft segment contains a polyamine; and a reinforcing cord layer that includes a reinforcing cord member wound around the outer circumferential portion of the tire frame along the tire circumferential direction at an average interval of from 0.4 mm to 3.2 mm in the tire width direction.

A polyamide-based thermoplastic elastomer, which includes a hard segment containing a copolymer of a dicarboxylic acid having from 4 to 12 carbon atoms and a diamine having from 4 to 12 carbon atoms, and a soft segment containing a polyamine, may be hereinafter referred to as "specific elastomer". Further, the average interval (pitch) of the reinforcing cord member in the tire width direction may be hereinafter referred to as "reinforcing cord interval".

Because of the above-described configuration, the tire has excellent rim fittability, low-temperature impact resistance, and heat resistance.

For example, as a method for attaining low-temperature impact resistance, a method of adjusting the hard segment/soft segment ratio of the thermoplastic elastomer contained in the tire frame is considered. However, generally speaking, when it is tried to improve the low-temperature impact resistance by adjusting the hard segment/soft segment ratio, the heat resistance is reduced in many cases, and it is thus not easy to improve all of rim fittability, low-temperature impact resistance, and heat resistance.

Accordingly, the present inventors brought their focus on the molecular structure of the thermoplastic elastomer contained in the tire frame as well as on the average interval of the reinforcing cord member in the tire width direction (reinforcing cord interval), the reinforcing cord member being wound around the outer circumferential portion of the tire

frame. As a result, the present inventors discovered that the rim fittability, the low-temperature impact resistance, and the heat resistance can be improved in a well-balanced manner by using a specific elastomer in the tire frame and controlling the reinforcing cord interval in the above-described range.

The reason why the rim fittability, the low-temperature impact resistance, and the heat resistance are improved by incorporating the specific elastomer into the tire frame and controlling the reinforcing cord interval in the above-described range is not clear; however, it is presumed as follows.

Examples of the polyamide-based thermoplastic elastomer include those having a hard segment containing a copolymer of a dicarboxylic acid and a diamine, and those having a hard segment that is a ring-opened polycondensate of a lactam. A polyamide-based elastomer, which has a hard segment containing a copolymer of a dicarboxylic acid and a diamine, may be hereinafter referred to as "n,m-polyamide-based elastomer". Further, a polyamide-based elastomer, which has a hard segment that is a ring-opened polycondensate of a lactam, may be hereinafter referred to as "n-polyamide-based elastomer".

The specific elastomer is an n,m-polyamide-based elastomer that has a hard segment containing a copolymer of a dicarboxylic acid and a diamine, and therefore, the specific elastomer tends to have a lower glass transition temperature and a higher melting point compared to an n-polyamide-based elastomer. It is considered that, in the production process of the specific elastomer, the glass transition temperature is lowered by occurrence of chain elongation of a soft segment via the dicarboxylic acid, and the melting point is increased by formation of a hard segment having a high molecular weight.

It is considered that, because of the low glass transition temperature of the specific elastomer, a tire using a tire frame containing the specific elastomer maintains the state of a rubber even at a low temperature and attains high low-temperature impact resistance. It is also considered that a tire using a tire frame containing the specific elastomer has heat resistance because of the high melting point of the specific elastomer.

In a case in which the numbers of the carbon atoms of the dicarboxylic acid and the diamine included in the hard segment of the specific elastomer are in the above-described ranges, the tire has superior low-temperature impact resistance and heat resistance and also attains superior rim fittability, as compared to a case in which the numbers of the carbon atoms are outside the above-described ranges. Specifically, in a case in which the number of the carbon atoms of the dicarboxylic acid and the number of the carbon atoms of the diamine is within the above-described ranges, due to moderate flexibility of the elastomer, the tire has superior rim fittability and low-temperature impact resistance as compared to a case in which the numbers of the carbon atoms are less than the above-described ranges, and the tire has superior heat resistance as compared to a case in which the numbers of the carbon atoms are greater than the above-described ranges. In addition, the dicarboxylic acid and the diamine each having the number of carbon atoms within the above-described range have a lower melting point and a lower polarity than a dicarboxylic acid and a diamine each having the number of carbon atoms less than the above-described range, and therefore, there are advantages in that high compatibility with the soft segment can be obtained and the desired specific elastomer can be easily synthesized.

Furthermore, it is considered that, in a case in which the reinforcing cord interval of the reinforcing cord member wound around the outer circumferential portion of the tire frame is within the above-described range, heat resistance and rim fittability as well as superior low-temperature impact resistance can be obtained. Specifically, in a case in which the reinforcing cord interval is within the above-described range, an increase in tire weight is further suppressed and superior fuel efficiency in traveling tends to be attained as compared to a case in which the reinforcing cord interval is smaller than the above-described range, while more sufficient tire-reinforcing effect is exerted and even superior low-temperature impact resistance is thereby attained as compared to a case in whch the reinforcing cord interval is larger than the above-described range.

*Tire Frame*

The tire frame is not particularly restricted as long as it contains at least the specific elastomer and has a circular shape.

The specific elastomer contained in the tire frame is described below.

<<Specific Elastomer>>

The specific elastomer is a polyamide-based thermoplastic elastomer having a hard segment and a soft segment, in which the hard segment contains a copolymer of a dicarboxylic acid having from 4 to 12 carbon atoms and a diamine having from 4 to 12 carbon atoms, and the soft segment contains a polyamine.

The term "polyamide-based thermoplastic elastomer" used herein refers to a thermoplastic resin material composed of a copolymer includes a polymer constituting a crystalline high-melting-point hard segment and a polymer constituting an amorphous low-glass-transition-temperature soft segment, wherein the polymer constituting the hard segment has an amide bond (-CONH-) in its main chain.

-Hard Segment-

The hard segment contains a copolymer of a dicarboxylic acid having from 4 to 12 carbon atoms and a diamine having from 4 to 12 carbon atoms. That is, the specific elastomer includes, as a hard segment, a structure derived from a copolymer of a dicarboxylic acid having from 4 to 12 carbon atoms and a diamine having from 4 to 12 carbon atoms.
A copolymer of a dicarboxylic acid having m carbon atoms and a diamine having n carbon atoms may be hereinafter referred to as "n,m-polyamide". Among n,m-polyamides, one in which m and n are each independently from 4 to 12 may be hereinafter referred to as "specific n,m-polyamide".
It is noted here that the number of carbon atoms of a dicarboxylic acid includes the carbon atoms constituting a carboxy group.
Examples of the dicarboxylic acid having from 4 to 12 carbon atoms include dicarboxylic acids represents by HOOC-$R^1$-COOH ($R^1$: a divalent hydrocarbon group having from 2 to 10 carbon atoms). Examples of the hydrocarbon group represented by $R^1$ include linear or branched, saturated or unsaturated, aliphatic or aromatic hydrocarbon groups. Among ehese, linear saturated aliphatic hydrocarbon groups are preferable, and linear saturated alkylene groups are more preferable. The number of carbon atoms of the dicarboxylic acid is preferably from 6 to 12, more preferably from 6 to 10, still more preferably from 8 to 10, particularly preferably from 9 to 10.
Specific examples of the dicarboxylic acid having from 4 to 12 carbon atoms include aliphatic dicarboxylic acids having from 4 to 12 carbon atoms, such as succinic acid, glutaric acid, adipic acid, pimelic acid, suberic acid, azelaic acid, sebacic acid, and dodecanedioic acid.
These dicarboxylic acids having from 4 to 12 carbon atoms may be used singly, or two or more kinds thereof may be used in combination.
Examples of the diamine having from 4 to 12 carbon atoms include diamines represents by $H_2N$-$R^2$-$NH_2$ ($R^2$: a divalent hydrocarbon group having from 4 to 12 carbon atoms). Examples of the hydrocarbon group represented by $R^2$ include linear or branched, saturated or unsaturated, aliphatic or aromatic hydrocarbon groups. Among these, linear saturated aliphatic hydrocarbon groups are preferable, and linear saturated alkylene groups are more preferable. The number of carbon atoms of the diamine is preferably from 6 to 12, more preferably from 6 to 10, still more preferably from 6 to 8.
Specific examples of the diamine having from 4 to 12 carbon atoms include tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and *meta*-xylenediamine.
These diamines having from 4 to 12 carbon atoms may be used singly, or two or more kinds thereof may be used combination.
The combination of the dicarboxylic acid having from 4 to 12 carbon atoms and the diamine having from 4 to 12 carbon atoms is not particularly restricted; however, in a case in which the number of carbon atoms of the dicarboxylic acid is "m" and the number of carbon atoms of the diamine is "n", the value of (m+n) is preferably from 12 to 24, more preferably from 14 to 22, still more preferably from 16 to 20, particularly preferably from 16 to 18. In a case in which the value of (m+n) is within this range, a tire having excellent low-temperature impact resistance, heat resistance, and rim fittability can be more easily obtained.
In a case in which two or more dicarboxylic acids having from 4 to 12 carbon atoms are used in combination, the value of "m" is the sum of the values obtained by multiplying the number of carbon atoms by molar fraction for each of the dicarboxylic acids having from 4 to 12 carbon atoms. Specifically, for example, in a case in which 1 mole of a dicarboxylic acid having 6 carbon atoms and 2 moles of a dicarboxylic acid having 12 carbon atoms are used, $m = 6 \times (1/3) + 12 \times (2/3) = 10$. The same applies for the value of "n" in the diamine having from 4 to 12 carbon atoms.
In the hard segment of the specific elastomer, the molar ratio (dicarboxylic acid/diamine ratio) of the dicarboxylic acid-derived moiety (OC-$R^1$-CO) (dicarboxylic acid-derived moiety) to a part derived from the diamine (HN-$R^2$-NH) (diamine-derived moiety) is preferably in a range of from 73/27 to 52/48, more preferably in a range of from 57/43 to 53/47.
In a case in which the molar ratio of the dicarboxylic acid-derived moiety (OC-$R^1$-CO) to the diamine-derived moiety (HN-$R^2$-NH) is within the above-described range, a tire having excellent low-temperature impact resistance, heat resistance, and rim fittability can be more easily obtained.
The dicarboxylic acid/diamine ratio can be adjusted to be in a desired range by setting the added amount of the dicarboxylic acid and the added amount of the diamine.
Further, the dicarboxylic acid/diamine ratio can be measured using $^1$H-NMR and $^{13}$C-NMR for the polyamide-based thermoplastic elastomer.
The specific elastomer may also contain, as a hard segment, a resin other than the specific n,m-polyamide. It is noted here, however, that the ratio (mass ratio) of the specific n,m-polyamide in all hard segments is preferably 50% by mass or more, more preferably 70% by mass or more, still more preferably 100% by mass.
Examples of other resin that can be used in combination as a hard segment include a polyamide (Polyamide

6) obtained by ring-opening polycondensation of ε-caprolactam, a polyamide (Polyamide 11) obtained by ring-opening polycondensation of undecanelactam, a polyamide (Polyamide 12) obtained by ring-opening polycondensation of lauryl lactam, a polyamide (Polyamide 12) obtained by polycondensation of 12-aminododecanoic acid, and n,m-polyamides other than the specific n,m-polyamide.

The weight-average molecular weight of the specific n,m-polyamide contained in the hard segment is, from the standpoints of crack resistance and injection moldability, preferably from 500 to 100,000, more preferably from 1,000 to 50,000, still more preferably 1,500 to 10,000.

- Soft Segment-

The soft segment contains at least a polyamine. In other words, the specific elastomer has a structure derived from a polyamine as a soft segment. A polyamine refers to a compound having a plurality of amino groups ($-NH_2$) in the molecule. In the disclosure, a polyamine may be used singly, or two or more kinds thereof may be used in combination.

The polyamine is not particularly limited, and examples thereof include polyether diamine obtained by reacting ammonia or the like with a terminal of polyether. As the polyether diamine, for example, an ABA-type triblock polyether diamine can be used.

Examples of the "ABA-type triblock polyether diamine" include a polyether diamine represented by the following Formula (N).

Formula (N)

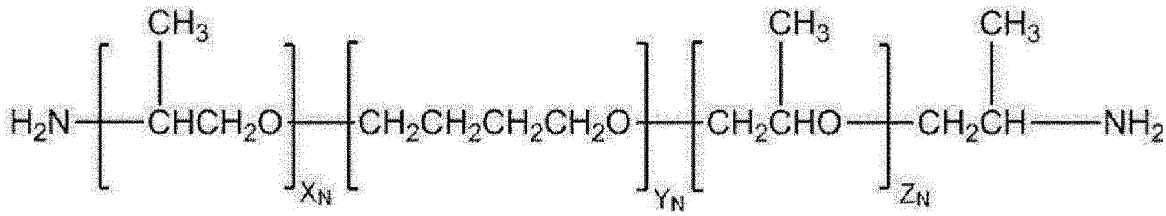

In Formula (N), $X_N$ and $Z_N$ each independently represent an integer from 1 to 20. $Y_N$ represents an integer from 4 to 50.

In Formula (N), $X_N$ and $Z_N$ are each preferably an integer from 1 to 18, more preferably an integer from 1 to 16, particularly preferably an integer from 1 to 14, and most preferably an integer from 1 to 12. In Formula (N), $Y_N$ is preferably an integer from 5 to 45, more preferably an integer from 6 to 40, particularly preferably an integer from 7 to 35, and most preferably an integer from 8 to 30.

Specific examples of the polyamine that may be contained as a soft segment include a compound obtained by diamination of polyester, polyether, or the like at the terminals, and examples thereof include a compound obtained by diamination of a polyether or a polyester such as polyethylene glycol, polypropylene glycol (PPG), polytetramethylene ether glycol (PTMG), or a polyester polyol, an ABA-type triblock polyetherdiol (such as PPG/PTMG/PPG triblock polyetherdiol), or the like at the terminals.

The specific elastomer may contain another component than a polyamine as a soft segment, and even in this case, the proportion (mass ratio) of a polyamine in all soft segments is preferably 80% by mass or more, more preferably 90% by mass or more, and still more preferably 100% by mass.

Examples of other components which can be additionally used as a soft segment include polyester and polyether, and examples thereof further include a polyether or a polyester such as polyethylene glycol, polypropylene glycol (PPG), polytetramethylene ether glycol (PTMG), or polyester polyol, and an ABA-type triblock polyether diol (such as PPG/PTMG/PPG triblock polyether diol).

A polymer forming a soft segment may contain a branched saturated diamine having from 6 to 22 carbon atoms, a branched alicyclic diamine having from 6 to 16 carbon atoms, or a diamine such as norbornane diamine as a monomer unit. These branched saturated diamines having from 6 to 22 carbon atoms, branched alicyclic diamine having from 6 to 16 carbon atoms, or norbornane diamine may be used singly or in combination.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having 6 to 16 carbon atoms include 5-amino-2,2,4-trimethyl-1-cyclopentane methylamine, and 5-amino-1,3,3-trimethylcyclohexanemethylamine. These diamines may be either cis-form or trans-form, and may be a mixture of these isomers.

Examples of the norbornane diamine include 2,5-norbornanedimethylamine, 2,6-norbornanedimethylamine,

and mixtures thereof.

Further, a polymer forming the soft segment may contain another diamine compound than the above-described ones as a monomer unit. Examples of other diamine compounds include an aliphatic diamine such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylenediamine, 2,4,4-trimethylhexamethylenediamine, or 3-methylpentane methylenediamine, an alicyclic diamine such as bis(4-aminocyclohexyl)methane, bis(4-aminocyclohexyl)propane, 1,3-bisaminomethylcyclohexane, or 1,4-bisaminomethylcyclohexane, and an aromatic diamine such as metaxylylene diamine or paraxylylene diamine.

These diamines may be used singly or in combination of two or more kinds as appropriate.

The number average molecular weight of a polyamine contained in a soft segment is preferably from 400 to 6,000, more preferably from 600 to 3,000 from the viewpoints of toughness and low temperature impact resistance.

The combination of the hard segment and the soft segment in the specific elastomer is not particularly restricted; however, it is preferable that the hard segment contains a copolymer including a combination of a dicarboxylic acid and a diamine, in which the (m+n) value is from 16 to 20, and the soft segment contains the above-described ABA-type triblock polyether diamine. In a case in which the above-described combination of hard segment and soft segment is used, a tire having excellent low-temperature impact resistance, heat resistance, and rim fittability can be more easily obtained.

-HS/SS-

In a case in which the mass of the hard segment contained in the specific elastomer is "HS" and the mass of the soft segment contained in the specific elastomer is "SS", the mass ratio represented by HS/SS is, from the standpoints of low-temperature impact resistance, heat resistance, and rim fittability, preferably from 25/75 to 70/30, more preferably from 30/70 to 65/35, still more preferably from 40/60 to 60/40.

The mass ratio represented by HS/SS can be adjusted to be in a desired range by setting the added amount of the raw material constituting the hard segment and the added amount of the raw material constituting the soft segment.

Further, the mass ratio represented by HS/SS can be measured using $^{1}H$-NMR and $^{13}C$-NMR for the polyamide-based thermoplastic elastomer.

-Molecular Weight-

The weight-average molecular weight of the specific elastomer is not particularly restricted; however, it is preferably from 20,000 to 250,000, more preferably from 50,000 to 200,000, still more preferably from 58,000 to 186,000, particularly preferably from 80,000 to 160,000, most preferably from 131,000 to 160,000.

In a case in which the weight-average molecular weight is 20,000 or greater, excellent crack resistance is exerted due to entanglement of molecular chains. Meanwhile, in a case in which the weight-average molecular weight is 250,000 or less, the melt viscosity is not excessively high, and excellent injection moldability is attained.

The weight-average molecular weight of the specific elastomer can be measured by gel permeation chromatography (GPC) using, for example, "HLC-8320GPC EcoSEC" manufactured by Tosoh Corporation.

-Synthesis of Specific Elastomer-

A method of synthesizing the specific elastomer is described below.

For example, in a case in which the hard segment contains only a specific n,m-polyamide and the soft segment contains only a polyamine, the specific elastomer can be synthesized by mixing all of a diamine and a dicarboxylic acid that are raw materials of the specific n,m-polyamide and the polyamine, and copolymerizing them in accordance with a known method.

In this process, the amino groups of the diamine react with the carboxy groups of the dicarboxylic acid. Further, the amino groups of the polyamine constituting the soft segment react with the carboxy groups of the dicarboxylic acid. Therefore, it is preferable to adjust the ratio (molar ratio) of the diamine, dicarboxylic acid and polyamine used for the synthesis to be 1/1 in terms of the ratio of dicarboxylic acid/(diamine + polyamine).

Examples of a polymerization method include a normal-pressure melt polymerization, and a synthesis method in which normal-pressure melt polymerization and further reduced-pressure melt polymerization are performed for the synthesis. These synthesis reactions may be performed in either a batchwise manner or a continuous manner. For the synthesis reactions, a batch-type reaction vessel, a single-tank or multi-tank continuous reaction apparatus, a tubular continuous reaction apparatus and the like may be used singly, or in combination as appropriate.

In the production of the specific elastomer, the polymerization temperature is preferably from 150 to 300°C, more preferably from 200 to 280°C. The polymerization time can be determined as appropriate in relation to the weight-average molecular weight of the specific elastomer to be synthesized and the polymerization temperature, and the

polymerization time is, for example, preferably from 0.5 to 30 hours, more preferably from 3 to 20 hours.

In the production of the specific elastomer, for the purposes of adjusting the molecular weight and stabilizing the melt viscosity in molding, an additive such as a monoamine or a diamine (e.g., laurylamine, stearylamine, or *meta*-xylylenediamine) or a monocarboxylic acid or a dicarboxylic acid (e.g., acetic acid, benzoic acid, stearic acid, adipic acid, or sebacic acid) may also be added as required. The additive can be selected as appropriate within a range that does not adversely affect the effects of the invention and in relation to the molecular weight, viscosity or the like of the specific elastomer to be produced.

In the production of the specific elastomer, a catalyst can be used if necessary. Examples of the catalyst include a compound containing at least one selected from the group consisting of P, Ti, Ge, Zn, Fe, Sn, Mn, Co, Zr, V, Ir, La, Ce, Li, Ca, and Hf.

Examples thereof include an inorganic phosphorus compound, an organic titanium compound, an organic zirconium compound, and an organic tin compound.

Specific examples of the inorganic phosphorus compound include a phosphorus-containing acid such as a phosphoric acid, a pyrophosphoric acid, a polyphosphoric acid, a phosphorous acid, or a hypophosphorous acid, an alkali metal salt of a phosphorus-containing acid, and an alkaline earth metal salt of a phosphorus-containing acid.

Examples of the organic titanium compound include a titanium alkoxide such as titanium tetrabutoxide, titanium or tetraisopropoxide).

Examples of the organic zirconium compound include a zirconium alkoxide such as zirconium tetrabutoxide (also referred to as "$Zr(OBu)_4$" or "$Zr(OC_4H_9)_4$").

Examples of the organic tin compound include a distannoxane compound such as 1-hydroxy-3-isothiocyanate-1,1,3,3-tetrabutyl distannoxane, tin acetate, dibutyltin dilaurate, and butyltin hydroxide oxide hydrate.

The catalyst addition amount and the catalyst addition timing are not particularly limited as long as the target substance can be obtained promptly.

<<Others>>

The tire frame is satisfactory as long as it contains at least the specific elastomer, and may also contain other component, such as a resin other than the specific elastomer or an additive other than a resin, within a range that does not impair the effects of the invention. It is noted here, however, the content of the specific elastomer in the tire frame is preferably 50% by mass or more, more preferably 90% by mass or more, with respect to the total amount of the tire frame. The tire frame can be formed using a resin material containing the specific elastomer.

Examples of the resin other than the specific elastomer include thermoplastic resins, thermoplastic elastomers other than the specific elastomer, and thermosetting resins.

Examples of the thermoplastic resins include polyamide-based thermoplastic resins other than the specific elastomer, polyester-based thermoplastic resins, olefin-based thermoplastic resins, polyurethane-based thermoplastic resins, vinyl chloride-based thermoplastic resins, and polystyrene-based thermoplastic resins.

Examples of the thermoplastic elastomers include polyamide-based thermoplastic elastomers (TPA), polystyrene-based thermoplastic elastomers (TPS), polyurethane-based thermoplastic elastomers (TPU), olefin-based thermoplastic elastomers (TPO), polyester-based thermoplastic elastomers (TPEE), and thermoplastic rubber vulcanizates (TPV), all of which are different from the specific elastomer and defined in JIS K6418; and other thermoplastic elastomers (TPZ).

Examples of the thermosetting resins include phenol-based thermosetting resins, urea-based thermosetting resins, melamine-based thermosetting resins, and epoxy-based thermosetting resins.

Examples of the additive other than a resin include rubbers, various fillers (e.g., silica, calcium carbonate, and clay), anti-aging agents, oils, plasticizers, colorants, weathering agents, and reinforcing agents.

<<Physical Properties of Tire Frame>>

The melting point of the tire frame is, for example, from 100°C to about 300°C and, from the standpoints of the heat resistance and the productivity of the tire, it is preferably from 100°C to about 250°C, more preferably from 120°C to 250°C.

The tensile elastic modulus, which is defined in JIS K7113:1995, of the tire frame is preferably from 50 MPa to 1,000 MPa, more preferably from 50 MPa to 800 MPa, particularly preferably from 50 MPa to 700 MPa. In a case in which the tensile elastic modulus of the resin material is from 50 MPa to 1,000 MPa, the tire can be efficiently fitted to a rim while maintaining the shape of the tire frame.

The tensile strength, which is defined in JIS K7113 (1995), of the tire frame is usually from 15 MPa to 70 MPa or so, preferably from 17 MPa to 60 MPa, more preferably from 20 MPa to 55 MPa.

The tensile strength at yield, which is defined in JIS K7113 (1995), of the tire frame is preferably 5 MPa or

greater, more preferably from 5 MPa to 20 MPa, particularly preferably from 5 MPa to 17 MPa. In a case in which the tensile strength at yield of the resin material is 5 MPa or greater, the tire can endure deformation caused by a load applied to the tire during traveling or the like.

The tensile elongation at yield, which is defined in JIS K7113 (1995), of the tire frame is preferably 10% or greater, more preferably from 10% to 70%, particularly preferably from 15% to 60%. In a case in which the tensile elongation at yield of the resin material is 10% or greater, a large elastic region is provided, so that favorable rim fittability can be attained.

The tensile elongation at break, which is defined in JIS K7113 (1995), of the tire frame is preferably 50% or greater, more preferably 100% or greater, particularly preferably 150% or greater, most preferably 200% or greater. In a case in which the tensile elongation at break of the resin material is 50% or greater, favorable rim fittability can be attained, and the tire can be made unlikely to rupture at collision.

The deflection temperature under load (under a load of 0.45 MPa), which is defined in ISO75-2 or ASTM D648, of the tire frame is preferably 50°C or higher, more preferably from 50°C to 150°C, particularly preferably from 50°C to 130°C. With the deflection temperature under load of the resin material being 50°C or higher, deformation of the tire frame can be inhibited even when vulcanization is performed in the production of the tire.

The thickness of the tire frame is not particularly restricted; however, from the standpoint of durability, it is preferably from 0.5 mm to 3.5 mm, more preferably from 0.7 mm to 2.5 mm, still more preferably from 1.0 mm to 2.0 mm.

It is noted here that the thickness of the tire frame is a value obtained by measuring the thickness at 10 points along the circumferential direction in the radial-direction center of a side portion using a known apparatus and then taking the average of the thus measured values.

*Reinforcing Cord Layer*

The reinforcing cord layer includes a reinforcing cord member that is wound around the outer circumferential portion of the tire frame along the tire circumferential direction at an average interval of from 0.4 mm to 3.2 mm in the tire width direction.

It is noted here that the term "reinforcing cord layer" used herein means a layer in which a reinforcing cord member is arranged on the outer circumferential portion of a tire frame.

<<Reinforcing Cord Member>>

The reinforcing cord member is, for example, a cord-form metal member that is used in a conventional rubber-made tire. Examples of the cord-form metal member include monofilaments (single strands) of metal fibers, and multifilaments (twisted strands) such as steel cord obtained by twisting steel fibers. From the standpoint of further improving the tire durability, the cord-form metal member is preferably a multifilament.

The cross-sectional shape (e.g., circular, elliptical, or polygonal), the size (diameter) and the like of the metal member are not particularly restricted, and any metal member that is suitable for the desired tire may be selected and used as appropriate.

From the standpoint of satisfying both internal pressure resistance and weight reduction of the tire, the thickness of the metal member is preferably from 0.2 mm to 2 mm, more preferably from 0.8 mm to 1.6 mm. The thickness of the metal member is defined as the number-average value of the thickness measured at five spots that are arbitrarily selected.

Further, the thickness of the reinforcing cord member is preferably from 0.2 mm to 2 mm, more preferably from 0.8 mm to 1.6 mm. The thickness of the reinforcing cord member is defined as the number-average value of the thickness measured at five spots that are arbitrarily selected. A measured value of the thickness is the maximum diameter at a cross-section of the reinforcing cord member (i.e., the distance between two points that are arbitrarily selected on the outline of the reinforcing cord member at a cross-section and have the maximum distance therebetween).

The tensile elastic modulus of the metal member is usually from about 100,000 MPa to about 300,000 MPa, preferably from 120,000 MPa to 270,000 MPa, more preferably from 150,000 MPa to 250,000 MPa. The tensile elastic modulus of the metal member is determined from the slope of a stress-strain curve plotted using a ZWICK-type chuck in a tensile tester.

The elongation at break (i.e., tensile elongation at break) of the metal member itself is usually from about 0.1% to about 15%, preferably from 1% to 15%, more preferably from 1% to 10%. The tensile elongation at break of the metal member can be determined from the strain based on a stress-strain curve plotted using a ZWICK-type chuck in a tensile tester.

Examples of a specific configuration of the reinforcing cord layer include one in which the reinforcing cord member is arranged on the outer circumferential portion of the tire frame along the tire circumferential direction, and one in which the reinforcing cord member is arranged at an angle with respect to the tire circumferential direction. Further, in the reinforcing cord layer, plural reinforcing cord members may be arranged such that they overlap with one another

in the tire thickness direction. In this case, the plural reinforcing cord members overlapping in the tire thickness direction may be arranged such that they are substantially parallel to each other, or such that they intersect with each other.

The average interval (reinforcing cord interval) in the tire width direction of the reinforcing cord layer can be determined by the following Formula.

Formula: Reinforcing cord interval (mm) = Reinforcing width (mm)/(Number of reinforcing cords - 1)

In this Formula, the "reinforcing width" means the width (mm) in the tire width direction of a cross-section of the reinforcing cord layer that is taken along the tire thickness direction, specifically the distance between two reinforcing cord members that are positioned at the respective ends in the tire width direction (at positions that are the farthest from each other in the tire width direction) (i.e., the distance between the centers of such two reinforcing cord members in the tire width direction). In this case, when the reinforcing cord members are cords made of a metal or the like that are coated with a rubber or a resin, the "reinforcing width" means the distance between the centers of the "cords made of a metal or the like" in the tire width direction.

Further, in the above-described Formula, the "number of reinforcing cords" means the total number of the reinforcing cord members included in a cross-section of the reinforcing cord layer that is taken along the tire thickness direction.

For example, among the reinforcing cord members that are wound around the outer circumferential portion of the tire frame, in a case in which the two reinforcing cord members positioned at the respective ends in the tire width direction (at positions that are the farthest from each other in the tire width direction) have a distance of 200 mm therebetween, the "reinforcing width" is 200 mm. Accordingly, in a case in which the total number of the reinforcing cord members included in a cross-section of the reinforcing cord layer that is taken along the tire thickness direction (number of reinforcing cords) is 151, the value of the reinforcing cord interval is "200 mm/(151 - 1) = 1.33 mm".

It is noted here that, in a case in which the reinforcing cord members are arranged such that they overlap with one another in the tire thickness direction (e.g., in a case in which a reinforcing cord member is wound around the tire frame and another reinforcing cord member is further wound thereon), the total number of the reinforcing cord members observed at the above-described cross-section is defined as the "number of reinforcing cords".

As described above, the reinforcing cord interval is from 0.4 mm to 3.2 mm from the standpoint of improving the rim fittability, the low-temperature impact resistance and the heat resistance in a well-balanced manner, and it is preferably from 0.6 mm to 2.2 mm, still more preferably from 0.8 mm to 1.5 mm, from the standpoint of further improving the low-temperature impact resistance.

<<Others>>

The reinforcing cord layer may also contain other component such as a resin, in addition to the reinforcing cord member.

Examples of the resin that may be contained in the reinforcing cord layer include the same ones as those exemplified for the resin contained in the tire frame and, from the standpoint of durability, the reinforcing cord layer contains, as the resin, preferably a polyamide-based thermoplastic elastomer, more preferably the above-described specific elastomer. In a case in which the specific elastomer is included in the reinforcing cord layer, the difference in hardness between the tire frame and the reinforcing cord layer can be reduced as compared to, for example, a case in which the reinforcing cord member is fixed using a rubber member; therefore, the reinforcing cord member can be more tightly adhered to and fixed with the tire frame.

Prefereble aspects of the specific elastomer used as the resin contained in the reinforcing cord layer are the same as those of the specific elastomer contained in the tire frame.

Further, for example, in a case in which the reinforcing cord member is a steel cord, even if the reinforcing cord member is in direct contact with a polyamide-based thermoplastic elastomer, it is possible to separate the reinforcing cord member only by heating at the time of tire disposal. On the other hand, in a case in which the reinforcing cord member is in direct contact with a cushion rubber, even if an attempt is made to separate the reinforcing cord member from the cushion rubber, it is difficult to separate a vulcanized rubber from the reinforcing cord member only by heating. Therefore, from the standpoint of the recyclability of the tire as well, it is preferable that the reinforcing cord layer contains a resin (more preferably a polyamide-based thermoplastic elastomer, still more preferably the specific elastomer). Particularly, a polyamide-based thermoplastic elastomer usually has a lower loss coefficient (tan $\delta$) than vulcanized rubbers. Accordingly, the rolling performance of the tire can be improved by incorporating a large amount of a polyamide-based thermoplastic elastomer into the reinforcing cord layer. Moreover, a polyamide-based thermoplastic elastomer having

a relatively high elastic modulus as compared to vulcanized rubbers is advantageous in that it has high in-plane shear rigidity and provides excellent steering stability and abrasion resistance during tire running.

The elastic modulus (tensile elastic modulus defined in JIS K7113:1995) of the resin contained in the reinforcing cord layer is preferably set in a range of from 0.1 times to 10 times of the elastic modulus of the specific elastomer constituting the tire frame. When the elastic modulus of the resin contained in the reinforcing cord layer is 10 times or less of that of the specific elastomer constituting the tire frame, the crown portion is not excessively hard, so that the tire can be easily fitted to a rim. Meanwhile, when the elastic modulus of the resin contained in the reinforcing cord layer is 0.1 times or greater of that of the specific elastomer constituting the tire frame, the resin constituting the reinforcing cord layer is not excessively soft, so that excellent belt in-plane shear rigidity is attained, and the cornering ability is improved.

In a case in which a resin is included in the reinforcing cord layer, from the standpoint of improving the pull-out resistance (i.e., difficulty to be pulled out) of the reinforcing cord member, preferably 20% or more, more preferably 50% or more of the surface of the reinforcing cord member is covered with the resin. The content of the resin in the reinforcing cord layer is, from the standpoint of improving the pull-out resistance of the reinforcing cord member, preferably 20% by mass or more, more preferably 50% by mass or more, with respect to the total amount of the materials constituting the reinforcing cord layer other than the reinforcing cord member.

In order to configure the reinforcing cord layer to contain a resin, for example, the reinforcing cord layer can be formed in such a manner that, in a cross-sectional view taken along the axial direction of the tire frame, the reinforcing cord member is at least partially embedded in the outer circumferential portion of the tire frame formed from the specific elastomer. In this case, the specific elastomer-containing resin material of the tire frame outer circumferential portion in which the reinforcing cord member is embedded corresponds to the resin material constituting the reinforcing cord layer, and the reinforcing cord layer is thus constituted by the specific elastomer material constituting the tire frame and the reinforcing cord member. Further, in a case in which the reinforcing cord layer is configured to contain a resin material, a coated cord member, which is formed by coating a reinforcing cord member with a resin of the same kind as or a different kind from the resin constituting the tire frame, may be wound in the circumferential direction of the tire frame, and these resins are preferably of the same kind. The resins of "the same kind" refer to a case in which the resins are both, for example, amide-based resins, urethane-based resins, or styrene-based resins.

When a coated cord member obtained by coating a reinforcing cord member with a resin is used, the thickness of a layer of the coating resin (hereinafter, also referred to as "resin layer") is not particularly restricted; however, from the standpoint of durability, it is preferably from 10 μm to 1,000 μm, more preferably from 50 μm to 700 μm.

It is noted here that the thickness of the resin layer is defined as the value that is measured on an SEM image of a cross-section of the coated cord member at a part having the smallest thickness.

The tensile elastic modulus of the resin layer is not particularly restricted, and it is, for example, from 50 MPa to 1,000 MPa. From the standpoints of riding comfort and running performance, the tensile elastic modulus of the resin layer is preferably from 50 MPa to 800 MPa, more preferably from 50 MPa to 700 MPa.

The tensile elastic modulus is measured in accordance with JIS K7113:1995.

The resin layer may also contain a component other than a resin. Examples of such other components include rubbers, elastomers, thermoplastic resins, various fillers (e.g., silica, calcium carbonate, and clay), anti-aging agents, oils, plasticizers, color developers, and weathering agents.

Further, the resin layer may cover the reinforcing cord member via other layer, such as an adhesive layer (i.e., a layer that is formed using an adhesive).

## First Embodiment

A tire according to a first embodiment of the invention is described below referring to the drawings.

A tire 10 of this embodiment is described below.

FIG. 1A is a perspective view illustrating a cross-section of a part of the tire according to one embodiment of the invention. FIG. 1B is a cross-sectional view of a bead portion fitted to a rim. As illustrated in FIG. 1A, the tire 10 of this embodiment has a cross-sectional shape that is substantially the same as those of conventional ordinary rubber-made pneumatic tires.

As illustrated in FIG. 1A, the tire 10 includes a tire case (tire frame) 17, which includes: a pair of bead portions 12, which are each in contact with a bead sheet 21 and a rim flange 22 of a rim 20 illustrated in FIG. 1B; side portions 14, which extend on the tire radial-direction outer side from the respective bead portions 12; and a crown portion 16 (outer circumferential portion), which connects the tire radial-direction outer end of one side portion 14 with the tire radial-direction outer end of the other side portion 14.

The tire case 17 of this embodiment is formed from the above-described specific polyamide-based thermoplastic elastomer. In this embodiment, the tire case 17 is formed from a single thermoplastic resin material (polyamide-based thermoplastic elastomer); however, the invention is not restricted to this configuration, and thermoplastic resin materials having different characteristics may be used for the respective parts of the tire case 17 (e.g., the side portions 14, the

crown portion 16, and the bead portions 12) as in conventional ordinary rubber-made pneumatic tires. Further, a reinforcing material (e.g., fibers made of a polymer material or a metal, cords, a non-woven fabric, or a woven fabric) may be embedded in the tire case 17 (e.g., the bead portions 12, the side portions 14, and the crown portion 16) so as to reinforce the tire case 17 with the reinforcing material.

The tire case 17 of this embodiment is obtained by joining together a pair of tire case half sections (tire frame pieces) 17A formed from the polyamide-based thermoplastic elastomer. The tire case half sections 17A are each formed by integrally molding (e.g., injection molding) one bead portion 12, one side portion 14 and a half-width crown portion 16, and the resulting tire case half sections 17A having the same annular shape are aligned to face each other and joined at the tire equatorial plane to form the tire case 17. The tire case 17 is not restricted to be formed by joining two members, and may be formed by joining three or more members.

The tire case half sections 17A formed from the polyamide-based thermoplastic elastomer can be molded by, for example, vacuum molding, pressure molding, injection molding, or melt casting. Therefore, since vulcanization is not required, the production process can be greatly simplified and the molding time can be shortened as compared to a conventional case of molding a tire case from a rubber.

In addition, in this embodiment, since the tire case half sections 17A have a bilaterally symmetrical shape, that is, one of the tire case half sections 17A has the same shape as the other tire case half section 17A, there is also an advantage that only one type of mold is required for molding the tire case half sections 17A.

In this embodiment, as illustrated in FIG. 1B, an annular bead core 18 composed of a steel cord, which is similar to those used in conventional ordinary pneumatic tires, is embedded in each bead portion 12. However, the invention is not restricted to this configuration, and the bead core 18 may be omitted as long as the rigidity of the bead portions 12 is ensured and there is no problem in fitting the bead portions 12 with the rim 20. The bead core 18 may also be formed by a material other than the steel cord, such as an organic fiber cord, a resin-coated organic fiber cord, or a hard resin.

In this embodiment, an annular sealing layer 24 composed of a material (e.g., a rubber) having superior sealing performance than the polyamide-based thermoplastic elastomer constituting the tire case 17 is formed on a part of each bead portion 12 that comes into contact with the rim 20, or at least on a part of each bead portion 12 that comes into contact with the rim flange 22 of the rim 20. This sealing layer 24 may also be formed on the parts where the tire case 17 (bead portions 12) comes into contact with the bead sheet 21. As the material having superior sealing performance than the polyamide-based thermoplastic elastomer constituting the tire case 17, a material softer than the polyamide-based thermoplastic elastomer constituting the tire case 17 can be used. As a rubber that can be used for the sealing layer 24, it is preferable to use a rubber of the same kind as the rubbers used on the outer surfaces of the bead portions of conventional ordinary rubber-made pneumatic tires. The sealing layer 24 composed of such a rubber may be omitted as long as the polyamide-based thermoplastic elastomer alone can ensure sealing performance with the rim 20, and other thermoplastic resin (thermoplastic elastomer) that has superior sealing performance than the polyamide-based thermoplastic elastomer may be used as well. Examples of such other thermoplastic resin include resins, such as polyurethane-based resins, polyolefin-based resins, polystyrene-based resins, and polyester resins; and blends of these resins with a rubber or an elastomer. It is also possible to use a thermoplastic elastomer, and examples thereof include polyester-based thermoplastic elastomers, polyurethane-based thermoplastic elastomers, polystyrene-based thermoplastic elastomers, polyolefin-based thermoplastic elastomers, combinations of these elastomers, and blends of these elastomers with a rubber.

As illustrated in FIG. 1A, in the crown portion 16, a reinforcing cord 26 (reinforcing cord member) having higher rigidity than the polyamide-based thermoplastic elastomer constituting the tire case 17 is wound in the circumferential direction of the tire case 17. In a cross-sectional view taken along the axial direction of the tire case 17, the reinforcing cord 26 is spirally wound with at least a part thereof being embedded in the crown portion 16, and forms a reinforcing cord layer 28. On the tire radial-direction outer circumferential side of the reinforcing cord layer 28, a tread 30 composed of a material (e.g., a rubber) having superior abrasion resistance than the polyamide-based thermoplastic elastomer constituting the tire case 17 is arranged.

The reinforcing cord layer 28 formed by the reinforcing cord 26 is described below referring to FIG. 2. FIG. 2 is a cross-sectional view taken along the tire rotation axis, which illustrates a state in which the reinforcing cord member is embedded in the crown portion of the tire case of the tire according to the first embodiment. As illustrated in FIG. 2, in a cross-sectional view taken along the axial direction of the tire case 17, the reinforcing cord 26 is spirally wound with at least a part thereof being embedded in the crown portion 16, and forms the reinforcing cord layer 28, which is indicated by the part between the dashed lines in FIG. 2, together with a part of the outer circumferential portion of the tire case 17. The part of the reinforcing cord 26 that is embedded in the crown portion 16 is in close contact with the polyamide-based thermoplastic elastomer constituting the crown portion 16 (tire case 17). As the reinforcing cord 26, for example, a monofilament (single strand) of metal fibers, organic fibers or the like, or a multifilament (twisted strand) in which such fibers are twisted together (e.g., a steel cord composed of twisted steel fibers), can be used. It is noted here that, in this embodiment, a steel cord is used as the reinforcing cord 26.

In FIG. 2, the embedding depth L indicates the amount of the reinforcing cord 26 embedded in the tire case 17 (crown portion 16) along the tire rotation axis direction. The embedding depth L of the reinforcing cord 26 in the crown portion 16 is preferably 1/5 or greater, more preferably greater than 1/2, of the diameter D of the reinforcing cord 26. It is most preferable that the entirety of the reinforcing cord 26 is embedded in the crown portion 16. In a case in which the embedding depth L of the reinforcing cord 26 is greater than 1/2 of the diameter D of the reinforcing cord 26, the reinforcing cord 26 is unlikely to come out of the embedded portion because of the dimensions of the reinforcing cord 26. Further, in a case in which the entirety of the reinforcing cord 26 is embedded into the crown portion 16, the surface (outer circumferential surface) is made flat, and therefore, entry of air to the periphery of the reinforcing cord 26 can be inhibited even if a member is placed on the crown portion 16 where the reinforcing cord 26 is embedded. The reinforcing cord layer 28 corresponds to a belt arranged on the outer circumferential surface of a carcass of a conventional rubber-made pneumatic tire.

As described above, the tread 30 is arranged on the tire radial-direction outer circumferential side of the reinforcing cord layer 28. As the rubber used for this tread 30, it is preferable to use a rubber of the same kind as the rubbers used in conventional rubber-made pneumatic tires. In place of the tread 30, a tread formed from other kind of thermoplastic resin material that has superior abrasion resistance than the polyamide-based thermoplastic elastomer constituting the tire case 17 may be used as well. On the surface of the tread 30 that comes into contact with the road surface, a tread pattern constituted by plural grooves is formed in the same manner as in conventional rubber-made pneumatic tires.

A method of producing the tire according to one embodiment of the invention is described below.

*Tire Frame Forming Step*

First, tire case half sections each supported on a thin metal support ring are aligned to face each other. Subsequently, a joining mold (not illustrated) is placed such that it comes into contact with the outer circumferential surfaces of the abutting parts of the tire case half sections. It is noted here that the joining mold is configured to press the peripheries of the joining parts (i.e., abutting parts) of the tire case half sections A with a prescribed pressure. Then, the peripheries of the joining parts of the tire case half sections are pressed at a temperature of not lower than the melting point of the thermoplastic resin material constituting the resulting tire case. When the joining parts of the tire case half sections are heated and pressurized by the joining mold, the joining parts are melted and the tire case half sections are fused together, as a result of which these members are integrated to form the tire case 17. In this embodiment, the joining parts of the tire case half sections are heated using the joining mold; however, the invention is not restricted thereto, and the tire case half sections may be joined together by, for example, heating the joining parts using a separately arranged high-frequency heater or the like, or softening or melting the joining parts in advance by irradiation with hot air, infrared radiation or the like, and subsequently applying a pressure to the joining parts using a joining mold.

*Reinforcing Cord Member Winding Step*

Next, the reinforcing cord member winding step is described referring to FIG. 3. FIG. 3 is a drawing for explaining operations of embedding a reinforcing cord member in the crown portion of the tire case using a cord heating device and rollers. In FIG. 3, a cord feeding apparatus 56 includes: a reel 58, on which the reinforcing cord 26 is wound; a cord heating device 59, which is arranged on the cord transfer direction downstream side of the reel 58; a first roller 60, which is arranged on the reinforcing cord 26 transfer direction downstream side; a first cylinder device 62, which moves the first roller 60 in a direction toward or away from the tire outer circumferential surface; a second roller 64, which is arranged on the reinforcing cord 26 transfer direction downstream side of the first roller 60; and a second cylinder device 66, which moves the second roller 64 in a direction toward or away from the tire outer circumferential surface. The second roller 64 can be utilized as a cooling roller made of a metal. Further, in this embodiment, the surface of the first roller 60 or that of the second roller 64 is coated with a fluororesin (in this embodiment, TEFLON (registered trademark)) so as to inhibit adhesion of the melted or softened polyamide-based thermoplastic elastomer. In this embodiment, the cord feeding apparatus 56 is configured to have two rollers, which are the first roller 60 and the second roller 64; however, the invention is not restricted to this configuration, and the cord feeding apparatus 56 may be configured to have only one of these rollers (i.e., a single roller).

The cord heating device 59 includes a heater 70 and a fan 72, which generate a hot air flow. In addition, the cord heating device 59 further includes: a heating box 74, to which hot air is supplied and in which the reinforcing cord 26 passes through the inner space; and a discharge outlet 76, through which the thus heated reinforcing cord 26 is discharged.

In this step, first, the temperature of the heater 70 of the cord heating device 59 is increased, and the ambient air heated by the heater 70 is sent to the heating box 74 by an air flow generated by rotation of the fan 72. Then, the reinforcing cord 26 drawn from the reel 58 is transferred into the heating box 74 whose inner space has been heated with hot air, whereby the reinforcing cord 26 is heated (for example, the temperature of the reinforcing cord 26 is increased

to 100°C to 200°C or so). The thus heated reinforcing cord 26 passes through the discharge outlet 76 and is then spirally wound with a constant tension around the outer circumferential surface of the crown portion 16 of the tire case 17 rotating in the direction of an arrow R as illustrated in FIG. 3. Here, once the heated reinforcing cord 26 comes into contact with the outer circumferential surface of the crown portion 16, the polyamide-based thermoplastic elastomer of the part in contact is melted or softened, and at least a part of the heated reinforcing cord 26 is embedded into the outer circumferential surface of the crown portion 16. In this process, since the heated reinforcing cord 26 is embedded into the melted or softened specific polyamide-based thermoplastic elastomer, a state in which there is no gap between the polyamide-based thermoplastic elastomer and the reinforcing cord 26, namely a tight contact state, is created. As a result of which entry of air into the parts where the reinforcing cord 26 is embedded is inhibited. By heating the reinforcing cord 26 to a temperature higher than the melting point of the polyamide-based thermoplastic elastomer of the tire case 17, the melting or softening of the polyamide-based thermoplastic elastomer in those parts in contact with the reinforcing cord 26 is facilitated. In the above-described manner, not only the reinforcing cord 26 can be easily embedded on the outer circumferential surface of the crown portion 16, but also entry of air can be effectively inhibited.

The embedding depth L of the reinforcing cord 26 can be adjusted by changing the heating temperature of the reinforcing cord 26, the tension acting on the reinforcing cord 26, the pressure applied by the first roller 60, and the like. In this embodiment, the embedding depth L of the reinforcing cord 26 is set to be 1/5 or greater of the diameter D of the reinforcing cord 26. The embedding depth L of the reinforcing cord 26 is more preferably greater than 1/2 of the diameter D, and it is most preferable that the entirety of the reinforcing cord 26 is embedded.

In the above-described manner, by winding the heated reinforcing cord 26 on the outer circumferential surface of the crown portion 16 while embedding the reinforcing cord 26, the reinforcing cord layer 28 is formed on the outer circumferential side of the crown portion 16 of the tire case 17.

Next, a belt-form vulcanized tread 30 is wound for one lap around the outer circumferential surface of the tire case 17, and the tread 30 is bonded on the outer circumferential surface of the tire case 17 using an adhesive or the like. As the tread 30, for example, a precured tread used in conventionally known retreaded tires can be used. This step is equivalent to the step of bonding a precured tread on the outer circumferential surface of a base tire of a retreaded tire.

Thereafter, the sealing layer 24 composed of a vulcanized rubber is bonded to each bead portion 12 of the tire case 17 using an adhesive or the like, whereby the tire 10 is completed.

*Effects*

In the tire 10 of this embodiment, since the tire case 17 is formed from the polyamide-based thermoplastic elastomer (specific elastomer), excellent low-temperature impact resistance, heat resistance and rim fittability are attained. In addition, since the tire 10 of this embodiment has a simpler structure than conventional rubber-made tires, the tire 10 is lighter in weight and has superior abrasion resistance and durability.

Further, the polyamide-based thermoplastic elastomer not only is highly adhesive to the reinforcing cord 26 but also exhibits excellent fixation performance, such as welding strength. Therefore, a phenomenon that air remains around the reinforcing cord 26 (entry of air) in the reinforcing cord member winding step can be inhibited. With the polyamide-based thermoplastic elastomer being highly adhesive and weldable to the reinforcing cord 26 and the entry of air to the periphery of the reinforcing cord member being thus inhibited, the movement of the reinforcing cord 26 caused by an input or the like during running can be effectively suppressed. As a result, for example, even when a tire-constituting member is arranged on the outer circumferential portion of the tire frame to cover the entirety of the reinforcing cord member, the movement of the reinforcing cord member is suppressed, and therefore, delamination and the like of these members (including the tire frame) are inhibited and the durability of the tire 10 is improved.

In the tire 10 of this embodiment, since the reinforcing cord 26 having higher rigidity than the polyamide-based thermoplastic elastomer is spirally wound in the circumferential direction around the outer circumferential surface of the crown portion 16 of the tire case 17 formed from a thermoplastic resin material, the puncture resistance, the cut resistance and the circumferential rigidity of the tire 10 are improved. By the improvement in the circumferential rigidity of the tire 10, creeping of the tire case 17 formed from a thermoplastic resin material is inhibited.

In a cross-sectional view taken along the axial direction of the tire case 17 (the cross-sectional view illustrated in FIG. 1A), the reinforcing cord 26 is at least partially embedded and in close contact with the polyamide-based thermoplastic elastomer on the outer circumferential surface of the crown portion 16 of the tire case 17 formed from the polyamide-based thermoplastic elastomer; therefore, entry of air during the production is inhibited, and the movement of the reinforcing cord 26 caused by an input or the like during running is suppressed. As a result, delamination and the like of the reinforcing cord 26, the tire case 17, and the tread 30 are inhibited, so that the durability of the tire 10 is improved.

Moreover, as illustrated in FIG. 2, since the embedding depth L of the reinforcing cord 26 is 1/5 or greater of the diameter D, entry of air during the production is effectively inhibited, so that the movement of the reinforcing cord 26 caused by an input or the like during running is further suppressed.

In a case in which the reinforcing cord layer 28 is configured to include the polyamide-based thermoplastic

elastomer, the difference in hardness between the tire case 17 and the reinforcing cord layer 28 can be reduced as compared to a case in which the reinforcing cord 26 is fixed with a cushion rubber; therefore, the reinforcing cord 26 can be tightly adhered to and fixed with the tire case 17. As a result of which the above-described entry of air can be effectively inhibited, and the movement of the reinforcing cord member during running can be effectively suppressed.

In a case in which the reinforcing cord 26 is a steel cord, the tire 10 is advantageous in terms of recyclability since, at the time of tire disposal, the reinforcing cord 26 can be easily separated and recovered from the polyamide-based thermoplastic elastomer by heating. In addition, since the polyamide-based thermoplastic elastomer has a lower loss coefficient (tan $\delta$) than vulcanized rubbers, the rolling performance of the tire can be improved by incorporating a large amount of the polyamide-based thermoplastic elastomer into the reinforcing cord layer 28. The polyamide-based thermoplastic elastomer is also more advantageous than vulcanized rubbers in that the polyamide-based thermoplastic elastomer has higher in-plane shear rigidity and provides superior steering stability and abrasion resistance during tire running.

Further, since the tread 30, which comes into contact with the road surface, is formed using a rubber material having superior abrasion resistance than the polyamide-based thermoplastic elastomer, the tire 10 has an improved abrasion resistance.

Moreover, the annular bead core 18 composed of a metal material is embedded in each of the bead portions 12; therefore, the tire case 17, namely the tire 10, is firmly retained on the rim 20 in the same manner as in conventional rubber-made pneumatic tires.

Furthermore, since the sealing layer 24, which is composed of a rubber material having superior sealing performance than the polyamide-based thermoplastic elastomer, is arranged on the parts of the bead portions 12 that come into contact with the rim 20, the sealing performance between the tire 10 and the rim 20 is improved. Accordingly, as compared to a case in which sealing is performed with the rim 20 and the polyamide-based thermoplastic elastomer, leakage of air from the tire is further inhibited. In addition, the rim fittability is also improved by arranging the sealing layer 24.

The above-described embodiment adopts a configuration in which the reinforcing cord 26 is heated and the thus heated reinforcing cord 26 melts or softens the polyamide-based thermoplastic elastomer of the parts in contact therewith; however, the invention is not restricted to this configuration, and a configuration in which, without heating the reinforcing cord 26, the outer circumferential surface of the crown portion 16 where the reinforcing cord 26 is to be embedded is heated using a hot air-generating apparatus and the reinforcing cord 26 is subsequently embedded into the crown portion 16, may be adopted as well.

In the first embodiment, the heat source of the cord heating device 59 includes a heater and a fan; however, the invention is not restricted to this configuration, and a configuration in which the reinforcing cord 26 is directly heated by radiant heat (e.g., infrared radiation) may be adopted as well.

Further, a configuration in which those parts where the reinforcing cord 26 is embedded and the thermoplastic resin material is thereby melted or softened are forcibly cooled by the second roller 64 made of a metal is adopted in the first embodiment; however, the invention is not restricted to this configuration, and a configuration in which cold air is directly blown to the parts where the thermoplastic resin material has been melted or softened and the melted or softened parts of the thermoplastic resin material is thereby forcibly cooled may be adopted as well.

Moreover, a configuration in which the reinforcing cord 26 is heated is adopted in the first embodiment; however, for example, a configuration in which the outer circumference of the reinforcing cord 26 is coated with the same thermoplastic resin material as that used for the tire case 17 may be adopted as well. In this case, by heating the coating thermoplastic resin material along with the reinforcing cord 26 at the time of winding the coated reinforcing cord on the crown portion 16 of the tire case 17, entry of air into the crown portion 16 during the embedding process can be effectively inhibited.

Thus far, aspects for carrying out the invention have been described referring to embodiments; however, these embodiments are merely examples, and the invention can be carried out with various modifications within a range that does not depart from the scope of the claims. It is to be understood that the scope of the rights of the invention is not limited to these embodiments.

## Second Embodiment

Next, the second embodiment of the tire of the invention is described below referring to the drawings. Similarly to the first embodiment, the tire in this embodiment has a cross-sectional shape that is substantially the same as those of conventional ordinary rubber-made pneumatic tires. Thus, in the below-described drawings, the same reference numerals are assigned to the same constituents as those of the first embodiment, and descriptions thereof may be omitted. FIG. 4A is a cross-sectional view of the tire of the second embodiment taken along the tire width direction, and FIG. 4B is an enlarged cross-sectional view of a bead portion taken along the tire width direction, which illustrates a state in which a rim is fitted to the tire of the second embodiment. FIG. 5 is a cross-sectional view taken along the tire width direction, which illustrates the periphery of a reinforcing layer of the tire of the second embodiment.

In the tire of the second embodiment, the tire case 17 is formed from the above-described specific polyamide-based thermoplastic elastomer as in the first embodiment. In a tire 200 of this embodiment, as illustrated in FIGs. 4A and 5, the reinforcing cord layer 28 (indicated by a dashed line in FIG. 5), in which a coated cord member 26B is wound in the circumferential direction, is disposed on the crown portion 16. This reinforcing cord layer 28 constitutes the outer circumferential portion of the tire case 17, and reinforces the circumferential rigidity of the crown portion 16. It is noted there that the outer circumferential surface of the reinforcing cord layer 28 is included in the outer circumferential surface 17S of the tire case 17.

This coated cord member 26B is formed by coating a cord member (reinforcing cord member) 26A, which has higher rigidity than the polyamide-based thermoplastic elastomer constituting the tire case 17, with a coating resin material 27 that is different from the polyamide-based thermoplastic elastomer constituting the tire case 17. The coated cord member 26B and the crown portion 16 are bonded (e.g., welded or adhered with an adhesive) in those parts where they are in contact with each other.

The elastic modulus of the coating resin material 27 is preferably set in a range of from 0.1 times to 10 times of the elastic modulus of the resin material constituting the tire case 17. When the elastic modulus of the coating resin material 27 is 10 times or less of that of the thermoplastic resin material constituting the tire case 17, the crown portion is not excessively hard, so that the tire can be easily fitted to a rim. Meanwhile, when the elastic modulus of the coating resin material 27 is 0.1 times or greater of that of the thermoplastic resin material constituting the tire case 17, the resin constituting the reinforcing cord layer 28 is not excessively soft, so that excellent belt in-plane shear rigidity is attained, and the cornering ability is improved. In this embodiment, the same material as the material constituting the tire case 17 (in this embodiment, the above-described specific polyamide-based thermoplastic elastomer) is used as the coating resin material 27.

As illustrated in Fig. 5, the coated cord member 26B has a substantially trapezoidal cross-sectional shape. Hereinafter, the top surface (the surface on the outer side in the tire radial direction) of the coated cord member 26B is indicated by 26U and the undersurface (the surface on the inner side in the tire radial direction) is indicated by 26D. In the embodiment, the cross-sectional shape of the coated cord member 26B is configured to be a substantially trapezoidal shape, but the present disclosure is not limited to this configuration, and any shape may be used as long as the cross-sectional shape is a shape excluding a shape that becomes wider from the undersurface 26D side (inner side in the tire radial direction) to the top surface 26U side (outer side in the tire radial direction).

As illustrated in Fig. 5, since the coated cord members 26B are arranged at intervals in the circumferential direction, a gap 28A is formed between the adjacent coated cord members 26B. For this reason, the outer circumferential surface of the reinforcing cord layer 28 has irregularities, and an outer circumferential surface 17S of the tire case 17 in which the reinforcing cord layer 28 constitutes an outer circumferential portion has also irregularities.

On the outer circumferential surface 17S (including irregularities) of the tire case 17, finely roughened irregularities are uniformly formed, and a cushion rubber 29 is bonded to the outer circumferential surface 17S via a bonding agent. In the cushion rubber 29, a rubber portion on the inner side in the radial direction flows into the roughened irregularities.

On the cushion rubber 29 (on the outer circumferential surface), a tread 30 made of a material having more excellent abrasion resistance than a resin material forming the tire case 17, for example, rubber, is bonded.

As the rubber (tread rubber 30A) used for the tread 30, the same kind of rubber as the rubber used for a conventional rubber pneumatic tire is preferably used. In place of the tread 30, a tread formed of another kind of resin material having more excellent abrasion resistance than the resin material forming the tire case 17 may be used. Similarly to a conventional rubber pneumatic tire, in the tread 30, a tread pattern (not illustrated) composed of a plurality of grooves is formed on the contact surface contacting a road surface.

Next, a method of producing the tire of this embodiment is described.

*Tire Frame Forming Step*

First, in the same manner as in the first embodiment, the tire case half sections 17A are formed and then heated and pressurized using a joining mold, whereby the tire case 17 is formed.

*Reinforcing Cord Member Winding Step*

The tire manufacturing device according to the embodiment is similar to the first embodiment, and in the cord feeding apparatus 56 illustrated in Fig. 3 of the first embodiment, a reel 58 around which the coated cord member 26B having a substantially trapezoidal cross-sectional shape obtained by coating the cord member 26A with the coating resin material 27 (thermoplastic material in the embodiment) is wound is used.

First, the temperature of the heater 70 is increased, and the ambient air heated by the heater 70 is sent to the heating box 74 by a wind generated by rotation of the fan 72. The coated cord member 26B unwound from the reel 58

is fed into the heating box 74 heated by a hot air, and heated (for example, the temperature of the outer circumferential surface of the coated cord member 26B is equal to or higher than the melting point of the coating resin material 27). Here, when the coated cord member 26B is heated, the coating resin material 27 is melted or softened.

The coated cord member 26B then passes through the outlet 76 and is helically wound with a constant tension around the outer circumferential surface of the crown portion 16 of the tire case 17 rotating in the direction toward the front of the page. At this time, the undersurface 26D of the coated cord member 26B comes into contact with the outer circumferential surface of the crown portion 16. The coating resin material 27 in a molten or softened state of the contact portion spreads on the outer circumferential surface of the crown portion 16, and the coated cord member 26B is welded to the outer circumferential surface of the crown portion 16. By this, the bonding strength between the crown portion 16 and the coated cord member 26B is improved.

*Roughening Treatment Step*

Next, with an unillustrated blasting device, while rotating the tire case 17, a blasting abrasive is ejected to the outer circumferential surface 17S of the tire case 17 at a high speed. The ejected blasting abrasive collides with the outer circumferential surface 17S, and forms fine roughened irregularities 96 having an arithmetic average roughness Ra of 0.05 mm or more on the outer circumferential surface 17S.

In this way, fine roughened irregularities 96 are formed on the outer circumferential surface 17S of the tire case 17, whereby the outer circumferential surface 17S becomes hydrophilic, and the wettability of a bonding agent described later improves.

*Layering Step*

Next, a bonding agent is applied onto the thus roughened outer circumferential surface 17S of the tire case 17.

The bonding agent is not particularly restricted and may be, for example, a resorcinol-formalin-latex-based adhesive, a triazine thiol-based adhesive, a chlorinated rubber-based adhesive, a phenolic resin adhesive, an isocyanate-based adhesive, a halogenated rubber-based adhesive, or a rubber-based adhesive. The bonding agent is preferably one which reacts at a temperature at which the cushion rubber 29 can be vulcanized (from 90°C to 140°C).

Then, the cushion rubber 29 in an unvulcanized state is wound for one lap around the outer circumferential surface 17S to which the bonding agent has been applied and, for example, a bonding agent such as a rubber cement composition is further applied onto the cushion rubber 29, after which the tread rubber 30A in a vulcanized or semi-vulcanized state is wound thereon for one lap, whereby a green tire case is obtained.

*Vulcanization Step*

Next, the thus obtained green tire case is vulcanized in a vulcanization can, a mold, or the like. In the process, the unvulcanized cushion rubber 29 flows into the roughened irregularities 96, which have been formed on the outer circumferential surface 17S of the tire case 17 by the roughening treatment. Once the vulcanization is completed, an anchoring effect is exerted by the cushion rubber 29 that has flowed into the roughened irregularities 96, and the bonding strength between the tire case 17 and the cushion rubber 29 is thereby improved. That is, the bonding strength between the tire case 17 and the tread 30 is improved by means of the cushion rubber 29.

Thereafter, the sealing layer 24, which is composed of a soft material that is softer than a resin material, is bonded to each bead portion 12 of the tire case 17 using an adhesive or the like, whereby the tire 200 is obtained.

*Effects*

In the tire 200 of this embodiment, since the tire case 17 is formed from the polyamide-based thermoplastic elastomer (specific elastomer), excellent low-temperature impact resistance, heat resistance, and rim fittability are attained. In addition, since the tire 200 of this embodiment has a simpler structure than conventional rubber-made tires, the tire 200 is lighter in weight and has superior abrasion resistance and durability. Further, the polyamide-based thermoplastic elastomer is highly adhesive to the coated cord member 26B.

In a case in which the reinforcing cord layer 28 is configured to include the coated cord member 26B, the difference in hardness between the tire case 17 and the reinforcing cord layer 28 can be reduced as compared to a case in which the reinforcing cord member 26A is simply fixed with the cushion rubber 29; therefore, the coated cord member 26B can be tightly adhered to and fixed with the tire case 17. As a result of which the above-described entry of air can be effectively inhibited, and the movement of the reinforcing cord member during running can be effectively suppressed.

When the cord member 26A is a steel cord, the tire 200 is advantageous in terms of recyclability since, at the time of tire disposal, the cord member 26A can be easily separated and recovered from the coated cord member 26B

by heating. In addition, since the polyamide-based thermoplastic elastomer has a lower loss coefficient (tan δ) than vulcanized rubbers, the rolling performance of the tire can be improved by incorporating a large amount of the polyamide-based thermoplastic elastomer into the reinforcing cord layer 28. The polyamide-based thermoplastic elastomer is also more advantageous than vulcanized rubbers in that the polyamide-based thermoplastic elastomer has higher in-plane shear rigidity and provides superior steering stability and abrasion resistance during tire running.

In the method of producing the tire of this embodiment, since the outer circumferential surface 17S of the tire case 17 is subjected to the roughening treatment in the process of integrating the tire case 17 with the cushion rubber 29 and the tread rubber 30A, the bondability (adhesiveness) is improved by an anchoring effect. Further, since the resin material constituting the tire case 17 is dug up due to the collision of the blasting abrasive, the wettability with the bonding agent is improved. As a result of which the bonding agent is retained in a uniformly coated state on the outer circumferential surface 17S of the tire case 17, so that the bonding strength between the tire case 17 and the cushion rubber 29 can be ensured.

Particularly, even when irregularities are formed on the outer circumferential surface 17S of the tire case 17, the vicinities of recesses (e.g., recess walls and recess bottoms) are roughened in a case in which the blasting abrasive collides with the recesses (gaps 28A), and the bonding strength between the tire case 17 and the cushion rubber 29 can thereby be ensured.

Meanwhile, since the cushion rubber 29 is disposed on the roughened region of the outer circumferential surface 17S of the tire case 17, the bonding strength between the tire case 17 and the cushion rubber can be effectively ensured.

When the cushion rubber 29 is vulcanized in the vulcanization step, the cushion rubber 29 flows into the roughened irregularities that are formed on the outer circumferential surface 17S of the tire case 17 by the roughening treatment. Then, once the vulcanization is completed, an anchoring effect is exerted by the cushion rubber 29 that has flowed into the roughened irregularities, and the bonding strength between the tire case 17 and the cushion rubber 29 is thereby improved.

In the tire 200 produced by such the tire production method, the bonding strength between the tire case 17 and the cushion rubber 29 is ensured, that is, the bonding strength between the tire case 17 and the tread 30 is ensured by means of the cushion rubber 29. As a result of which delamination between the outer circumferential surface 17S of the tire case 17 and the cushion rubber 29 in the tire 200 is suppressed during running and the like.

Further, since the outer circumferential portion of the tire case 17 is constituted by the reinforcing cord layer 28, the puncture resistance and the cut resistance are improved as compared to a case in which the outer circumferential portion is constituted by a member other than the reinforcing cord layer 28.

Moreover, since the reinforcing cord layer 28 is formed by winding the coated cord member 26B, the circumferential rigidity of the tire 200 is improved. The improvement in the circumferential rigidity leads to suppression of creeping of the tire case 17 (i.e., a phenomenon that plastic deformation of the tire case 17 increases with time under constant stress), as well as improvement in the pressure resistance against air pressure applied from the tire radial-direction inner side.

In this embodiment, irregularities are formed on the outer circumferential surface 17S of the tire case 17; however, the invention is not restricted to this configuration, and a configuration in which the outer circumferential surface 17S is formed flat may be adopted as well.

Further, in the tire case 17, a reinforcing cord layer may be formed in such a manner that the coated cord member wound and bonded on the crown portion of the tire case is covered with a coating thermoplastic material. In this case, a coating layer can be formed by discharging the coating thermoplastic material in a molten or softened state onto the reinforcing cord layer 28. Alternatively, a coating layer may be formed by heating a welding sheet into a molten or softened state and subsequently pasting the welding sheet to the surface (outer circumferential surface) of the reinforcing cord layer 28, without using an extruder.

In the second embodiment, case segments (tire case half sections 17A) are joined to form the tire case 17; however, the invention is not restricted to this configuration, and the tire case 17 may be integrally formed using a mold or the like.

In the second embodiment, the cushion rubber 29 is arranged between the tire case 17 and the tread 30; however, the invention is not restricted to this configuration, and a configuration in which the cushion rubber 29 is not arranged may be adopted as well.

In the second embodiment, a thermoplastic material is used as the coating resin material 27 constituting the coated cord member 26B, and this coating resin material 27 is heated into a molten or softened state and used for welding the coated cord member 26B to the outer circumferential surface of the crown portion 16; however, the invention is not restricted to this configuration, and a configuration in which the coated cord member 26B is adhered to the outer circumferential surface of the crown portion 16 using an adhesive or the like, without heating the coating resin material 27, may be adopted as well.

Alternatively, a configuration in which a thermosetting resin is used as the coating resin material 27 constituting the coated cord member 26B and the coated cord member 26B is adhered to the outer circumferential surface of the

crown portion 16 using an adhesive or the like, without heating the coated cord member 26B, may be adopted.

Moreover, a configuration in which a thermosetting resin is used as the coating resin material 27 constituting the coated cord member 26B and the tire case 17 is formed from a thermoplastic resin material may be adopted. In this case, the coated cord member 26B may be adhered to the outer circumferential surface of the crown portion 16 using an adhesive or the like, or the coated cord member 26B may be welded to the outer circumferential surface of the crown portion 16 by heating, into a molten or softened state, the part of the tire case 17 where the coated cord member 26B is to be arranged.

Furthermore, a configuration in which a thermoplastic material is used as the coating resin material 27 constituting the coated cord member 26B and the tire case 17 is also formed from a thermoplastic resin material may be adopted as well. In this case, the coated cord member 26B may be adhered to the outer circumferential surface of the crown portion 16 using an adhesive or the like, or the coated cord member 26B may be welded to the outer circumferential surface of the crown portion 16 by heating the coating resin material 27 into a molten or softened state while heating, into a molten or softened state, the part of the tire case 17 where the coated cord member 26B is to be arranged. When the tire case 17 and the coated cord member 26B are both heated into a molten or softened state, these members are mixed well with each other, and therefore, the bonding strength is improved. Further, in a case in which both of the resin material constituting the tire case 17 and the coating resin material 27 constituting the coated cord member 26B are thermoplastic resin materials, these thermoplastic materials are preferably of the same kind, particularly preferably the same thermoplastic material.

The roughened outer circumferential surface 17S of the tire case 17 may be activated by further performing thereon a corona treatment, a plasma treatment or the like and, after the hydrophilicity is thereby improved, an adhesive may be applied thereto.

The sequence for the production of the tire 200 is not restricted to the one adopted in the second embodiment and may be modified as appropriate.

Thus far, aspects for carrying out the invention have been described referring to embodiments; however, these embodiments are merely examples, and the invention can be carried out with various modifications within a range that does not depart from the scope of the claims. It is to be understood that the scope of the rights of the invention is not limited to these embodiments.

Although specific embodiments of the invention have been described by way of the first and the second embodiments, the invention is not restricted to these embodiments.

The tire according to one embodiment of the invention may be configured in the following manner as described for the first embodiment.

(1-1) The tire according to one embodiment of the invention may be configured such that, in a cross-sectional view taken along the axial direction of the tire frame, at least a part of the reinforcing cord member is embedded in the outer circumferential portion of the tire frame formed from a thermoplastic resin material.

In a case in which a part of the reinforcing cord member is embedded in the outer circumferential portion of the tire frame, a phenomenon that air remains in the periphery of the cord at the time of winding the reinforcing cord member (entry of air) can be further inhibited. The inhibition of the entry of air to the periphery of the reinforcing cord member leads to suppression of the movement of the reinforcing cord member caused by an input or the like during running. As a result, for example, in a case in which a tire-constituting member is arranged on the outer circumferential portion of the tire frame to cover the entirety of the reinforcing cord member, the movement of the reinforcing cord member is suppressed, as a result of which delamination and the like between these members (including the tire frame) can be inhibited and the durability can be improved.

(1-2) In the tire according to one embodiment of the invention, a tread formed from a material having superior abrasion resistance than the above-described thermoplastic resin material may be arranged on the radial-direction outer side of the reinforcing cord layer.

In a case in whuch the tread, which comes into contact with the road surface, is formed from a material having superior abrasion resistance than the thermoplastic resin material, the abrasion resistance of the tire can be further improved.

(1-3) In the tire according to one embodiment of the invention, the reinforcing cord member can be embedded in the outer circumferential portion of the tire frame along the circumferential direction to a depth of 1/5 or greater of the diameter of the reinforcing cord member in a cross-sectional view taken along the axial direction of the tire frame.

In a case in which 1/5 or greater of the diameter of the reinforcing cord member is embedded in the outer circumferential portion of the tire frame in a cross-sectional view taken along the axial direction of the tire frame, entry of air to the periphery of the reinforcing cord member can be effectively inhibited, so that the movement of the reinforcing cord member caused by an input or the like during running can be further suppressed.

(1-4) The tire according to one embodiment of the invention may be configured such that the tire frame includes, on the radial-direction inner side, bead portions each coming in contact with a bead sheet and rim flange of a rim,

and an annular bead core composed of a metal material is embedded in each of the bead portions.

In a case in which the tire frame is provided with the bead portions that serve as parts to be fitted with the rim and the annular bead core composed of a metal material is embedded in each of the bead portions, the tire frame (i.e., tire) can be firmly retained on the rim in the same manner as in conventional rubber-made pneumatic tires.

(1-5) In the tire according to one embodiment of the invention, a sealing portion formed from a material having superior sealing performance (adhesiveness with a rim) than the above-described thermoplastic resin material can be arranged on the part of each bead portion that comes into contact with the rim.

In a case in which the sealing portion formed from a material having superior sealing performance than the thermoplastic resin material is arranged on the parts where the tire frame and the rim come into contact with each other, adhesion between the tire (tire frame) and the rim can be improved. As a result of which leakage of air from the tire can be further inhibited as compared to a case in which only the rim and the thermoplastic resin material are used. In a case in which the sealing portion is provided, the rim fittability of the tire can also be improved.

(1-6) The tire according to one embodiment of the invention can be produced by a production method which includes: the tire frame piece forming step of forming tire frame pieces that constitute a part of a circular tire frame using a thermoplastic resin material containing at least a polyamide-based thermoplastic elastomer; the tire frame piece bonding step of forming the above-described tire frame by fusing two or more of the thus formed tire frame pieces, which make a pair, with application of heat to the bonding surfaces of the tire frame pieces; and the reinforcing cord member winding step of winding a reinforcing cord member on the outer circumferential portion of the thus formed tire frame in the circumferential direction to form a reinforcing cord layer.

In this production method, the tire frame pieces of the circular tire frame may be formed from a polyamide-based thermoplastic elastomer-containing thermoplastic resin material. The melting point of the polyamide-based thermoplastic elastomer can be set to be from 100°C to 250°C or so; therefore, for example, it is not necessary to perform the step of fusing the tire frame pieces at 300°C or higher, so that the fusing step can be performed at a relatively low temperature. Since the fusing step can be performed at a relatively low temperature in this manner, the productivity of the tire can be improved in terms of energy utilization rate and the like. In addition, when the tire frame is formed by fusing the tire frame pieces formed from the polyamide-based thermoplastic elastomer, a sufficient bonding strength is attained between the tire frame pieces, and the performance of the frame itself is not deteriorated by the temperature of the fusing process; therefore, the durability during running (e.g., puncture resistance and abrasion resistance) can be improved in the thus produced tire.

(1-7) The production method of the tire may be configured such that, in the tire frame piece bonding step, the bonding surfaces of the tire frame pieces are heated to a temperature higher than the melting point (e.g., a temperature of from the melting point + 10°C to the melting point + 150°C) of the thermoplastic resin material for forming the tire frame pieces.

In a case in which the bonding surfaces of the segments is heated to a temperature higher than the melting point of the thermoplastic resin material for forming the tire frame pieces, the tire frame pieces can be sufficiently fused with other; therefore, the productivity of the tire can be improved while enhancing the durability of the tire.

(1-8) The production method of the tire may be configured such that, in the reinforcing cord member winding step, the reinforcing cord member is wound around the outer circumferential portion of the tire frame in such a manner that at least a part of the reinforcing cord member is embedded while melting or softening the outer circumferential portion of the tire frame formed in the tire frame piece bonding step.

In a case in which the reinforcing cord member is wound around the outer circumferential portion of the tire frame in such a manner that at least a part of the reinforcing cord member is embedded while melting or softening the outer circumferential portion of the tire frame, the at least a part of the reinforcing cord member which is thus embedded and the thus melted or softened thermoplastic resin material can be welded together. As a result of which entry of air between the outer circumferential portion of the tire frame and the reinforcing cord member in a cross-sectional view taken along the axial direction of the tire frame can be further inhibited. In addition, in a case in which the part where the reinforcing cord member is embedded is cooled and solidified, the fixed state of the reinforcing cord member embedded in the tire frame is improved.

(1-9) The production method of the tire may be configured such that, in the reinforcing cord member winding step, 1/5 or greater of the diameter of the reinforcing cord is embedded into the outer circumferential portion of the tire frame in a cross-sectional view taken along the axial direction of the tire frame.

In a case in which 1/5 or greater of the diameter of the reinforcing cord member is embedded into the outer circumferential portion of the tire frame in a cross-sectional view taken along the axial direction of the tire frame, entry of air to the periphery of the reinforcing cord during the production can be effectively inhibited, and the embedded reinforcing cord member can be made less likely to come out of the tire frame.

(1-10) The production method of the tire may be configured such that, in the reinforcing cord member winding step, the heated reinforcing cord member is embedded into the tire frame.

In a case in which the reinforcing cord member is embedded into the tire frame with heating in the reinforcing cord

winding step, when the heated reinforcing cord member comes into contact with the outer circumferential portion of the tire frame, the part in contact is melted or softened; therefore, the reinforcing cord member can be easily embedded into the outer circumferential portion of the tire frame.

(1-11) The production method of the tire may be configured such that, in the cord member winding step, the part of the outer circumferential portion of the tire frame where the reinforcing cord member is to be embedded is heated.

In a case in which the part of the outer circumferential portion of the tire frame where the reinforcing cord member is to be embedded is heated, the heated part of the tire frame is melted or softened, and the reinforcing cord member can be easily embedded therein.

(1-12) The production method of the tire may be configured such that, in the cord member winding step, the reinforcing cord member is spirally wound in the circumferential direction of the outer circumferential portion of the tire frame while pressing the reinforcing cord member against the outer circumferential portion of the tire frame.

In a case in which the reinforcing cord member is spirally wound while pressing the reinforcing cord member against the outer circumferential portion of the tire frame, the amount of the reinforcing cord member embedded into the outer circumferential portion of the tire frame can be adjusted.

(1-13) According to the production method of the tire, the cord member winding step may be configured such that, after winding the reinforcing cord member on the tire frame, the melted or softened part of the outer circumferential portion of the tire frame is cooled.

In a case in which the melted or softened part of the outer circumferential portion of the tire frame is forcibly cooled after embedding the reinforcing cord member, the melted or softened part of the outer circumferential portion of the tire frame can be cooled and solidified more quickly and rapidly than natural cooling. By cooling the outer circumferential portion of the tire more quickly than natural cooling, deformation of the outer circumferential portion of the tire frame can be inhibited and the movement of the reinforcing cord member can be suppressed.

Further, the tire according to one embodiment of the invention may be configured in the following manner as described for the second embodiment.

(2-1) The tire according to one embodiment of the invention may be configured by the above-described production method which further includes: the roughening treatment step of roughening the outer circumferential surface of the tire frame in a case in which a particle-form blasting abrasive collides with the outer circumferential surface of the tire frame; and the layering step of layering a tire-constituting rubber member on the thus roughened outer circumferential surface via a bonding agent.

In a case in which the roughening treatment step is performed, the particle-form blasting abrasive is made to collide with the outer circumferential surface of the circular tire frame formed from the polyamide-based thermoplastic elastomer-containing thermoplastic resin material, and fine roughened irregularities are thereby formed on the outer circumferential surface. Such a treatment of forming fine roughened irregularities in a case in which the blasting abrasive collides with the outer circumferential surface of the tire frame is referred to as "roughening treatment". Thereafter, on the outer circumferential surface which has been subjected to the roughening treatment, the tire-constituting rubber member is layered via the bonding agent. Here, since the outer circumferential surface of the tire frame is subjected to the roughening treatment in the process of integrating the tire frame with the tire-constituting rubber member, the bondability (adhesiveness) is improved by an anchoring effect. In addition, the resin material constituting the tire frame is dug up due to the collision of the blasting abrasive, and therefore, the wettability of the outer circumferential surface is improved. As a result of which the bonding agent is retained in a uniformly coated state on the outer circumferential surface of the tire frame, and the bonding strength between the tire frame and the tire-constituting rubber member can be ensured.

(2-2) In the tire according to one embodiment of the invention, at least a part of the outer circumferential surface of the tire frame has irregularities, and the irregularities can be produced by performing a roughening treatment in the roughening treatment step.

In a case in which at least a part of the outer circumferential surface of the tire frame has irregularities, the vicinities of recesses (recess walls and recess bottoms) are roughened in a case in which the blasting abrasive collides with the irregularities, and the bonding strength between the tire frame and the tire-constituting rubber member can thereby be ensured.

(2-3) In the tire according to one embodiment of the invention, the outer circumferential portion of the tire frame is constituted by a reinforcing layer that constitutes the irregularities on the outer circumferential surface, and the reinforcing layer can be formed by winding a coated cord member, which is formed by coating a reinforcing cord with a resin material of the same kind as or a different kind from the resin material constituting the tire frame, in the circumferential direction of the tire frame.

In a case in which the outer circumferential portion of the tire frame is constituted with a reinforcing layer formed by winding such a coated cord member in the circumferential direction of the tire frame, the circumferential rigidity of the tire frame can be improved.

(2-4) In the tire according to one embodiment of the invention, a thermoplastic resin material may be used as the

resin material constituting the coated cord member.
In a case in which a thermoplastic material having thermoplasticity is used as the resin material constituting the coated cord member, the tire can be produced and recycled more easily as compared to a case in which a thermosetting material is used as the resin material.
(2-5) The tire according to one embodiment of the invention may be configured such that, in the roughening treatment step, a roughening treatment is performed on a region that is larger than the region where the tire-constituting rubber member is layered.
In a case in which a roughening treatment is performed in the roughening treatment step on a region that is larger than the region where the tire-constituting rubber member is layered, the bonding strength between the tire frame and the tire-constituting rubber member can be certainly ensured.
(2-6) The tire according to one embodiment of the invention may be configured such that, in the roughening treatment step, a roughening treatment is performed on the outer circumferential surface to attain an arithmetic average roughness (Ra) of 0.05 mm or more.
In a case in which a roughening treatment is performed in the roughening treatment step on the outer circumferential surface of the tire frame to attain an arithmetic average roughness (Ra) of 0.05 mm or more, in a case in which a tire-constituting rubber member in an unvulcanized or semi-vulcanized state is layered on the thus roughened outer circumferential surface via a bonding agent and subsequently vulcanized for example, the rubber of the tire-constituting rubber member is allowed to flow into the bottom of the roughened irregularities formed by the roughening treatment. In a case in which the rubber of the tire-constituting rubber member is flowed into the bottom of the roughened irregularities, a sufficient anchoring effect between the outer circumferential surface and the tire-constituting rubber member can be obtained, and the bonding strength between the tire frame and the tire-constituting rubber member can thereby be improved.
(2-7) In the tire according to one embodiment of the invention, a rubber in an unvulcanized or semi-vulcanized state can be used as the tire-constituting rubber member.
In a case in which the rubber in an unvulcanized or semi-vulcanized state is used as the tire-constituting rubber member, when the tire-constituting rubber member is vulcanized, the rubber flows into the roughened irregularities formed on the outer circumferential surface of the tire frame by the roughening treatment. Once the vulcanization is completed, an anchoring effect is exerted by the rubber (vulcanized) that has flowed into the roughened irregularities, and the bonding strength between the tire frame and the tire-constituting rubber member can thereby be improved.
It is noted here that the term "vulcanized (state)" refers to a state in which the vulcanization degree has reached the level required for a final product, and the term "semi-vulcanized state" refers to a state in which the vulcanization degree is higher than that of an unvulcanized state but has not yet reached to the level required for a final product.
(2-8) The tire according to one embodiment of the invention may be configured to include: a circular tire frame, which is formed from the polyamide-based thermoplastic elastomer-containing thermoplastic resin material and whose outer circumferential surface has been subjected to a roughening treatment in a case in which a particle-form blasting abrasive collides therewith; and a tire-constituting rubber member, which is layered on the thus roughened outer circumferential surface via a bonding agent.
In a case in which the circular tire frame subjected to the roughening treatment is used, the bonding strength between the tire frame and the tire-constituting rubber member can be improved by an anchor effect. Further, since the outer circumferential surface has been subjected to the roughening treatment, favorable wettability with the bonding agent is attained. As a result of which the bonding agent is retained in a uniformly coated state on the outer circumferential surface of the tire frame, and the bonding strength between the tire frame and the tire-constituting rubber member is thereby ensured, so that delamination between the tire frame and the tire-constituting rubber member can be inhibited.

The tire according to one embodiment of the invention encompasses tires of the following aspects.

[1] A tire comprising: a circular tire frame that comprises a polyamide-based thermoplastic elastomer having a hard segment and a soft segment, the hard segment containing a copolymer of a dicarboxylic acid having from 4 to 12 carbon atoms and a diamine having from 4 to 12 carbon atoms, and the soft segment containing a polyamine; and a reinforcing cord layer that comprises a reinforcing cord member wound around an outer circumferential portion of the tire frame along a tire circumferential direction at an average interval of from 0.4 mm to 3.2 mm in a tire width direction.
[2] The tire according to [1], wherein, in a case in which a number of carbon atoms of the dicarboxylic acid is "m" and a number of carbon atoms of the diamine is "n", a value of (m+n) is from 12 to 24.
[3] The tire according to [2], wherein: the value of (m+n) is from 16 to 20, and the polyamine is an ABA-type triblock polyether diamine.

[4] The tire according to any one of [1] to [3], wherein, in a case in which a mass of the hard segment contained in the polyamide-based thermoplastic elastomer is "HS" and a mass of the soft segment contained in the polyamide-based thermoplastic elastomer is "SS", a mass ratio represented by HS/SS is from 25/75 to 70/30.

[5] The tire according to any one of [1] to [4], wherein the polyamide-based thermoplastic elastomer has a weight-average molecular weight of from 20,000 to 250,000.

[6] The tire according to any one of [1] to [5], wherein the reinforcing cord layer contains the polyamide-based thermoplastic elastomer.

EXAMPLES

Hereinbelow, the invention is described more specifialy by way of Examples. However, the invention is not restricted to the following examples.

Example 1

*Synthesis of Polyamide-based Thermoplastic Elastomer*

To a 2-litre reaction vessel equipped with a stirrer, a nitrogen gas inlet, and a condensed water discharge outlet, 77.4 g of sebacic acid (dicarboxylic acid), 10.1 g of 1,4-aminobutane (diamine), 263 g of PPG/PTMG/PPG (a polymer forming a soft segment: a triblock polyether diamine having amino groups at both ends, trade name: ELASTAMINE (registered trademark) RT-1000, manufactured by HUNTSMAN Corporation), 150 g of purified water, and 0.7 g of sodium hypophosphite were added, and these materials were mixed.

The resulting mixture was subjected to nitrogen purging and subsequently heated to 240°C under a confining pressure. After the vessel pressure reached 0.5 MPa, the pressure was slowly released, and the mixture was stirred at 240°C for 5 minutes under a nitrogen stream to obtain a polyamide-based thermoplastic elastomer. The weight-average molecular weight of the thus obtained polyamide-based thermoplastic elastomer is shown in Table 1 (i.e., "Elastomer molecular weight" in the table).

*Production of Tire*

The thus obtained polyamide-based thermoplastic elastomer was pelletized and injection-molded at a molding temperature of 240°C and a mold temperature of 60°C using "1300emII" manufactured by Mitsubishi Heavy Industries Plastic Technology Co., Ltd. as an injection molding machine, whereby tire case half sections were obtained. Using the thus obtained tire case half sections, a tire was produced by the above-described production method of the second embodiment.

As a reinforcing cord member (the cord member 26A of the second embodiment), a multifilament having an average diameter (φ) of 1.15 mm (a twisted strand obtained by twisting seven φ0.35-mm monofilaments (made of steel, strength: 280 N, elongation: 3%)) was used.

This reinforcing cord member was used as a coated cord member that was coated with the same resin as the resin used for the tire case production and, as the resin coating the reinforcing cord member (the coating resin material 27 of the second embodiment), the same polyamide-based thermoplastic elastomer as the one used for the tire frame was used.

The thickness of the tire frame and that of the resin layer of the coated cord member were 1.5 mm and 100 μm, respectively, and the value of the reinforcing cord interval was as shown in Table 1.

Examples 2 to 15

Each polyamide-based thermoplastic elastomer was obtained in the same manner as in Example 1, except that the types of the dicarboxylic acid ("Dicarboxylic acid") and the diamine ("Diamine") that were used as raw materials of a hard segment, the molar ratio of the dicarboxylic acid and the diamine ("Dicarboxylic acid/diamine molar ratio"), the type of the soft segment ("SS structure"), the mass ratio of the hard segment and the soft segment ("HS/SS mass ratio"), and the molecular weight of the polyamide-based thermoplastic elastomer to be synthesized ("Elastomer molecular weight") were changed as shown in Tables 1 to 3 below.

It is noted here that, in Examples 9 and 10, a PPG (a polymer obtained by aminating the hydroxyl groups at both ends of a polypropylene glycol; ELASTAMINE (registered trademark) RP-2009, manufactured by HUNTSMAN Corporation) was used as the polymer forming the soft segment.

Further, each tire was obtained in the same manner as in Example 1, except that the thus obtained polyamide-based thermoplastic elastomer was used as both the tire frame and the resin coating the reinforcing cord member, and

the reinforcing cord interval was changed as shown in Tables 1 to 3.

Comparative Example 1

To a 2-litre reaction vessel equipped with a stirrer, a nitrogen gas inlet, and a condensed water discharge outlet, 500 g of caprolactam, 32.4 g of adipic acid, and 38.7 g of aminohexanoic acid were added and, after sufficiently purging the inside of this vessel with nitrogen, the temperature was increased to 250°C, and the added materials were allowed to react for 4 hours under a pressure of 0.6 MPa. After releasing the pressure, the reaction was allowed to further proceed for 1 hour under a nitrogen stream, followed by washing of the resultant with water, whereby a desired polyamide 6 polymer having a number-average molecular weight of 3,700 was obtained as a white solid.

To 200 g of the thus obtained polyamide 6 polymer, 54 g of PPG/PTMG/PPG (a polymer forming a soft segment: a triblock polyether diamine having amino groups at both ends, trade name: ELASTAMINE (registered trademark) RT-1000, manufactured by HUNTSMAN Corporation) and 0.5 g of sodium hypophosphite were added, and the resulting mixture was stirred at 230°C for 4 hours to obtain a white polyamide-based thermoplastic elastomer. The weight-average molecular weight of the thus obtained polyamide-based thermoplastic elastomer is shown in Table 4 ("Elastomer molecular weight" in the table).

Further, a tire was obtained in the same manner as in Example 1, except that the thus obtained polyamide-based thermoplastic elastomer was used as both the tire frame and the resin coating the reinforcing cord member, and the reinforcing cord interval was changed as shown in Table 4.

Comparative Example 2

To a 2-litre reaction vessel equipped with a stirrer, a nitrogen gas inlet, and a condensed water discharge outlet, 43.7 g of aminododecanoic acid, 600 g of aminododecanolactam, and 41 g of dodecanedioic acid were added and, after sufficiently purging the inside of this vessel with nitrogen, the temperature was increased to 280°C, and the added materials were allowed to react for 4 hours under a pressure of 0.4 MPa. After releasing the pressure, the reaction was allowed to further proceed for 1 hour under a nitrogen stream, whereby a polyamide 12 polymer having a number-average molecular weight of 3,000 was obtained as a white solid.

To 200 g of the thus obtained polyamide 12 polymer, 54 g of PPG/PTMG/PPG (a polymer forming a soft segment: a triblock polyether diamine having amino groups at both ends, trade name: ELASTAMINE (registered trademark) RT-1000, manufactured by HUNTSMAN Corporation) and 0.5 g of sodium hypophosphite were added, and the resulting mixture was stirred at 230°C for 4 hours to obtain a white polyamide-based thermoplastic elastomer. The weight-average molecular weight of the thus obtained polyamide-based thermoplastic elastomer is shown in Table 4 ("Elastomer molecular weight" in the table).

Further, a tire was obtained in the same manner as in Example 1, except that the thus obtained polyamide-based thermoplastic elastomer was used as both the tire frame and the resin coating the reinforcing cord member, and the reinforcing cord interval was changed as shown in Table 4.

Comparative Examples 3 to 5

Each polyamide-based thermoplastic elastomer was obtained in the same manner as in Example 1, except that the types of the dicarboxylic acid ("Dicarboxylic acid") and the diamine ("Diamine") that were used as raw materials of a hard segment, the molar ratio of the dicarboxylic acid and the diamine ("Dicarboxylic acid/diamine molar ratio"), the type of the soft segment ("SS structure"), the mass ratio of the hard segment and the soft segment ("HS/SS mass ratio"), and the molecular weight of the polyamide-based thermoplastic elastomer to be synthesized ("Elastomer molecular weight") were changed as shown in Table 4.

Further, each tire was obtained in the same manner as in Example 1, except that the thus obtained polyamide-based thermoplastic elastomer was used as both the tire frame and the resin coating the reinforcing cord member, and the reinforcing cord interval was changed as shown in Table 4.

Evaluations

*Evaluation of Heat resistance*

The polyamide-based thermoplastic elastomers obtained above were each pelletized and injection-molded at 240°C and, from the resulting sample piece, a test piece was punched out as a sample for which the heat resistance was evaluated.

Specifically, the sample was heated from 0°C to 200°C at a rate of 10°C/min using a differential scanning

calorimeter (DSC) (DSC Q2000, manufactured by manufactured by TA Instruments Japan Inc). The evaluation criteria were as follows. The results thereof are shown in Tables 1 to 4.

A: The melting onset temperature was 190°C or higher.
B: The melting onset temperature was 175°C or higher but lower than 190°C.
C: The melting onset temperature was lower than 175°C.

*Evaluation of Rim Fittability*

Each tire obtained above was fitted to a rim, and the rim fittability was evaluated as "A" when air sealing was ensured, "B" when the tire was hard and had poor ease of handling at the time of the rim fitting, or "C" when air sealing could not be ensured due to crack generation or deformation. The results thereof are shown in Tables 1 to 4.

*Evaluation of Low-temperature Impact Resistance*

In a -30°C atmosphere under an air pressure of 140 kPa, each tire obtained above was pressed on a drum with a load of 6 kN and made to run on the drum rotating at a speed equivalent to 80 km/h over a distance of 10,000 km. Thereafter, from two viewpoints of whether or not air leaked from the tire after the run and whether or not damage was confirmed in observation of the inner surface, the low-temperature impact resistance was evaluated based on the following criteria. The results thereof are shown in Tables 1 to 4.

A: Neither air leakage nor crack on the tire frame inner surface was observed.
B: No air leakage occurred; however, a crack was observed on the tire frame inner surface.
C: Air leakage was observed after the run.

Table 1

| | | Example 1 | Example 2 | Example 3 | Example 4 | Example 5 |
|---|---|---|---|---|---|---|
| HS | HS structure | PA410 | PA69 | PA610 | PA612 | PA1010 |
| | Diamine | 1,4-diaminobutane | hexamethylene diamine | hexamethylene diamine | hexamethylene diamine | 1,10-decanediamine |
| | Dicarboxylic acid | sebacic acid | azelaic acid | sebacic acid | dodecanedioic acid | sebacic acid |
| | Dicarboxylic acid/ diamine molar ratio | 77/23 | 53/47 | 71/29 | 58/42 | 54/46 |
| SS | SS structure | PPG/PTMG/PPG | PPG/PTMG/PPG | PPG/PTMG/PPG | PPG/PTMG/PPG | PPG/PTMG/PPG |
| | SS molecular weight | 1,000 | 1,000 | 1,000 | 1,000 | 1,000 |
| Elastomer | HS/SS mass ratio | 25/75 | 70/30 | 30/70 | 55/45 | 70/30 |
| | Elastomer molecular weight | 162,000 | 135,000 | 131,000 | 194,000 | 186,000 |
| Reinforcing cord | Reinforcing cord interval (mm) | 0.8 | 0.8 | 0.8 | 0.8 | 0.8 |
| Evaluation | Rim fittability | B | A | A | A | A |
| | Low-temperature impact resistance | B | B | A | A | A |
| | Heat resistance | A | A | A | A | A |

Table 2

| | | Example 6 | Example 7 | Example 8 | Example 9 | Example 10 |
|---|---|---|---|---|---|---|
| HS | HS structure | PA1012 | PA1212 | PA66 | PA612 | PA1010 |
| | Diamine | 1,10-decanediamine | 1,12-dodecanediamine | hexamethylene diamine | hexamethylene diamine | 1,10-decanediamine |
| | Dicarboxylic acid | dodecanedioic acid | dodecanedioic acid | adipic acid | dodecanedioic acid | sebacic acid |
| | Dicarboxylic acid/ diamine molar ratio | 54/46 | 55/45 | 66/34 | 55/45 | 54/46 |
| SS | SS structure | PPG/PTMG/PPG | PPG/PTMG/PPG | PPG/PTMG/PPG | PPG | PPG |
| | SS molecular weight | 1,000 | 1,000 | 1,000 | 2,000 | 2,000 |
| Elastomer | HS/SS mass ratio | 70/30 | 70/30 | 30/70 | 65/35 | 70/30 |
| | Elastomer molecular weight | 165,000 | 177,000 | 131,000 | 189,000 | 173,000 |
| Reinforcing cord | Reinforcing cord interval (mm) | 0.8 | 0.8 | 0.8 | 0.8 | 0.8 |
| Evaluation | Rim fittability | A | A | A | A | A |
| | Low-temperature impact resistance | A | A | B | A | B |
| | Heat resistance | B | B | A | A | A |

Table 3

| | | Example 11 | Example 12 | Example 13 | Example 14 | Example 15 |
|---|---|---|---|---|---|---|
| HS | HS structure | PA810 | PA104 | PA126 | PA58 | PA65 |
| | Diamine | 1,8-diaminooctane | 1,10-decanediamine | 1,12-dodecanediamine | 1,5-diaminopentane | hexamethylene diamine |
| | Dicarboxylic acid | sebacic acid | butanedioic acid | adipic acid | suberic acid | glutaric acid |
| | Dicarboxylicacid/diamine molar ratio | 54/46 | 71/29 | 57/43 | 68/32 | 65/35 |
| SS | SS structure | PPG/PTMG/PPG | PPG/PTMG/PPG | PPG/PTMG/PPG | PPG/PTMG/PPG | PPG/PTMG/PPG |
| | SS molecular weight | 1,000 | 1,000 | 1,000 | 1,000 | 1,000 |
| Elastomer | HS/SS mass ratio | 70/30 | 25/75 | 55/45 | 30/70 | 30/70 |
| | Elastomer molecular weight | 142,000 | 137,000 | 183,000 | 151,000 | 140,000 |
| Reinforcing cord | Reinforcing cord interval (mm) | 0.8 | 0.8 | 0.8 | 0.8 | 0.8 |
| Evaluation | Rim fittability | A | B | A | B | A |
| | Low-temperature impact resistance | A | B | B | B | B |
| | Heat resistance | A | A | A | A | A |

Table 4

| | Comparative Example 1 | Comparative Example 2 | Comparative Example 3 | Comparative Example 4 | Comparative Example 5 |
|---|---|---|---|---|---|
| HS structure | PA6 | PA12 | PA38 | PA1214 | PA136 |
| Diamine | - | - | 1,3-diaminopropane | 1,12-dodecanediamine | 1,13-tridecanediamine |
| Dicarboxylic acid | - | - | suberic acid | tetradecanedioic acid | adipic acid |
| Dicarboxylic acid/ diamine molar ratio | - | - | 53/47 | 62/38 | 59/41 |
| SS structure | PPG/ PTMG/PPG | PPG/ PTMG/PPG | PPG/ PTMG/PPG | PPG/PTMG/PPG | PPG/PTMG/PPG |
| SS molecular weight | 1,000 | 1,000 | 1,000 | 1,000 | 1,000 |
| HS/SS mass ratio | 75/25 | 75/25 | 65/35 | 50/50 | 50/50 |
| Elastomer molecular weight | 146,000 | 128,000 | 58,000 | 164,000 | 165,000 |
| Reinforcing cord interval (mm) | 0.8 | 0.8 | 0.8 | 0.8 | 0.8 |
| Rim fittability | A | A | B | B | A |
| Low-temperature impact resistance | C | B | C | B | B |
| Heat resistance | A | C | A | C | C |

The components shown in Tables 1 to 4 above are as follows.

-Polymer for Soft Segment-

- PPG/PTMG/PPG: manufactured by HUNTSMAN Corporation, trade name: JEFFAMINE (registered trademark) RT-1000
- PPG: manufactured by HUNTSMAN Corporation, trade name: ELASTAMINE (registered trademark) RP-2009

As shown in Tables 1 to 4, it is seen that, in Examples, superior rim fittability, low-temperature impact resistance, and heat resistance were obtained as compared to Comparative Examples. Particularly, in Examples 3 to 5, 8, and 13 in which the sum of the number of carbon atoms of dicarboxylic acid and the number of carbon atoms of diamine (value of (m+n)) was from 16 to 20 and the polyamine was an ABA-type triblock polyether diamine, even superior rim fittability, low-temperature impact resistance, and heat resistance were obtained as compared to other Examples.

## Claims

**1.** A tire (10, 200) comprising:

a circular tire frame (17) that comprises a polyamide-based thermoplastic elastomer having a hard segment and a soft segment, and a reinforcing cord layer (28) that comprises a reinforcing cord member (26A) wound around an outer circumferential portion (16) of the tire frame (17) along a tire circumferential direction, **characterised in that**

the hard segment contains a copolymer of a dicarboxylic acid having from 4 to 12 carbon atoms and a diamine having from 4 to 12 carbon atoms, and the soft segment contains a polyamine; and
the reinforcing cord member (26A) is wound at an average interval of from 0.4 mm to 3.2 mm in a tire width direction.

2. The tire (10, 200) according to claim 1, wherein, in a case in which a number of carbon atoms of the dicarboxylic acid is "m" and a number of carbon atoms of the diamine is "n", a value of (m+n) is from 12 to 24.

3. The tire (10, 200) according to claim 2, wherein:

the value of (m+n) is from 16 to 20, and
the polyamine is an ABA-type triblock polyether diamine.

4. The tire (10, 200) according to any one of claims 1 to 3, wherein, in a case in which a mass of the hard segment contained in the polyamide-based thermoplastic elastomer is "HS" and a mass of the soft segment contained in the polyamide-based thermoplastic elastomer is "SS", a mass ratio represented by HS/SS is from 25/75 to 70/30.

5. The tire (10, 200) according to any one of claims 1 to 4, wherein the polyamide-based thermoplastic elastomer has a weight-average molecular weight of from 20,000 to 250,000.

6. The tire (10, 200) according to any one of claims 1 to 5, wherein the reinforcing cord layer (28) contains the polyamide-based thermoplastic elastomer.

7. The tire (10, 200) according to any one of claims 1 to 6, wherein the reinforcing cord member (26A) is a cord-form metal member.

8. The tire (10, 200) according to any one of claims 1 to 7, wherein the average interval of the reinforcing cord member (26A) is from 0.6 mm to 2.2 mm in the tire width direction.

9. The tire (10, 200) according to any one of claims 1 to 7, wherein the average interval of the reinforcing cord member (26A) is from 0.8 mm to 1.5 mm in the tire width direction.

10. The tire (10, 200) according to claim 5, wherein the weight-average molecular weight of the polyamide-based thermoplastic elastomer of the circular tire frame (17) is in a range from 58,000 to 186,000.

11. The tire (10, 200) according to claim 5, wherein the weight-average molecular weight of the polyamide-based thermoplastic elastomer of the circular tire frame (17) is in a range from 80,000 to 160,000.

12. The tire (10, 200) according to claim 5, wherein the weight-average molecular weight of the polyamide-based thermoplastic elastomer of the circular tire frame (17) is in a range from 131,000 to 160,000.

## Patentansprüche

1. Reifen (10, 200), Folgendes beinhaltend:

einen kreisförmigen Reifenrahmen (17), welcher ein polyamidbasiertes thermoplastisches Elastomer beinhaltet, welches ein hartes Segment und ein weiches Segment besitzt, und eine Verstärkungskordschicht (28), welcher ein Verstärkungskordglied (26A) beinhaltet, welches um einen Außenumfangsabschnitt (16) des Reifenrahmens (17) entlang einer Reifenumfangsrichtung gewunden ist,
**dadurch gekennzeichnet, dass**:

das harte Segment ein Copolymer aus einer Dicarbonsäure enthält, welche 4 bis 12 Kohlenstoffatome besitzt, und aus einem Diamin, welches 4 bis 12 Kohlenstoffatome besitzt, und das weiche Segment ein Polyamin enthält; und
das Verstärkungskordglied (26A) in einem mittleren Intervall von 0,4 mm bis 3,2 mm in einer Reifenbreitenrichtung gewunden ist.

2. Reifen (10, 200) nach Anspruch 1, bei welchem, in einem Fall, in welchem eine Anzahl von Kohlenstoffatomen der Dicarbonsäure "m" beträgt und eine Anzahl von Kohlenstoffatomen des Diamins "n" beträgt, ein Wert aus (m+n) zwischen 12 und 24 beträgt.

3. Reifen (10, 200) nach Anspruch 2, bei welchem:

der Wert aus (m+n) zwischen 16 und 20 beträgt, und
das Polyamin ein Triblock-Polyetherdiamin vom Typ ABA ist.

4. Reifen (10, 200) nach einem der Ansprüche 1 bis 3, bei welchem, in einem Fall, in welchem eine Masse des harten Segments, welches in dem polyamidbasierten thermoplastischen Elastomer enthalten ist, "HS" beträgt und eine Masse des weichen Segments, welches in dem polyamidbasierten thermoplastischen Elastomer enthalten ist, "SS" beträgt, ein Massenverhältnis, dargestellt durch HS/SS, zwischen 25/75 und 70/30 beträgt.

5. Reifen (10, 200) nach einem der Ansprüche 1 bis 4, bei welchem das polyamidbasierte thermoplastische Elastomer ein gewichtsmittleres Molekulargewicht zwischen 20000 und 250000 beträgt.

6. Reifen (10, 200) nach einem der Ansprüche 1 bis 5, bei welchem die Verstärkungskordschicht (28) das polyamidbasierte thermoplastische Elastomer enthält.

7. Reifen (10, 200) nach einem der Ansprüche 1 bis 6, bei welchem das Verstärkungskordglied (26A) ein kordförmiges Metallglied ist.

8. Reifen (10, 200) nach einem der Ansprüche 1 bis 7, bei welchem das mittlere Intervall des Verstärkungskordgliedes (26A) zwischen 0,6 mm und 2,2 mm in der Reifenbreitenrichtung beträgt.

9. Reifen (10, 200) nach einem der Ansprüche 1 bis 7, bei welchem das mittlere Intervall des Verstärkungskordgliedes (26A) zwischen 0,8 mm und 1,5 mm in der Reifenbreitenrichtung beträgt.

10. Reifen (10, 200) nach Anspruch 5, bei welchem das gewichtsmittlere Molekulargewicht des polyamidbasierten thermoplastischen Elastomers des kreisförmigen Reifenrahmens (17) in einem Bereich von 58000 bis 186000 liegt.

11. Reifen (10, 200) nach Anspruch 5, bei welchem das gewichtsmittlere Molekulargewicht des polyamidbasierten thermoplastischen Elastomers des kreisförmigen Reifenrahmens (17) in einem Bereich von 80000 bis 160000 liegt.

12. Reifen (10, 200) nach Anspruch 5, bei welchem das gewichtsmittlere Molekulargewicht des polyamidbasierten thermoplastischen Elastomers des kreisförmigen Reifenrahmens (17) in einem Bereich von 131000 bis 160000 liegt.

## Revendications

1. Pneumatique (10, 200) comprenant :

une structure de pneumatique circulaire (17) qui comprend un élastomère thermoplastique à base de polyamide qui comporte un segment dur et un segment mou, et une couche de câble de renforcement (28) qui comprend un élément de câble de renforcement (26A) qui est enroulé autour d'une section circonférentielle externe (16) de la structure de pneumatique (17) suivant une direction circonférentielle de pneumatique ;
**caractérisé en ce que** :

le segment dur contient un copolymère constitué d'un acide dicarboxylique qui comporte de 4 à 12 atomes de carbone et d'une diamine qui comporte de 4 à 12 atomes de carbone, et le segment mou contient une polyamine ; et
l'élément de câble de renforcement (26A) est enroulé selon un intervalle moyen qui va de 0,4 mm à 3,2 mm dans une direction de largeur de pneumatique.

2. Pneumatique (10, 200) selon la revendication 1, dans lequel, dans le cas dans lequel un nombre d'atomes de carbone de l'acide dicarboxylique est "m" et un nombre d'atomes de carbone de la diamine est "n", une valeur de (m + n) va de 12 à 24.

3. Pneumatique (10, 200) selon la revendication 2, dans lequel :

   la valeur de (m + n) va de 16 à 20 ; et
   la polyamine est une polyéther diamine tribloc du type ABA.

4. Pneumatique (10, 200) selon l'une quelconque des revendications 1 à 3, dans lequel, dans le cas dans lequel une masse du segment dur qui est contenu dans l'élastomère thermoplastique à base de polyamide est "HS" et une masse du segment mou qui est contenu dans l'élastomère thermoplastique à base de polyamide est "SS", un rapport de masses représenté par HS/SS va de 25/75 à 70/30.

5. Pneumatique (10, 200) selon l'une quelconque des revendications 1 à 4, dans lequel l'élastomère thermoplastique à base de polyamide présente un poids moléculaire moyen en poids qui va de 20000 à 250000.

6. Pneumatique (10, 200) selon l'une quelconque des revendications 1 à 5, dans lequel la couche de câble de renforcement (28) contient l'élastomère thermoplastique à base de polyamide.

7. Pneumatique (10, 200) selon l'une quelconque des revendications 1 à 6, dans lequel l'élément de câble de renforcement (26A) est un élément métallique sous forme de câble.

8. Pneumatique (10, 200) selon l'une quelconque des revendications 1 à 7, dans lequel l'intervalle moyen de l'élément de câble de renforcement (26A) va de 0,6 mm à 2,2 mm dans la direction de largeur de pneumatique.

9. Pneumatique (10, 200) selon l'une quelconque des revendications 1 à 7, dans lequel l'intervalle moyen de l'élément de câble de renforcement (26A) va de 0,8 mm à 1,5 mm dans la direction de largeur de pneumatique.

10. Pneumatique (10, 200) selon la revendication 5, dans lequel le poids moléculaire moyen en poids de l'élastomère thermoplastique à base de polyamide de la structure de pneumatique circulaire (17) s'inscrit à l'intérieur d'une plage qui va de 58000 à 186000.

11. Pneumatique (10, 200) selon la revendication 5, dans lequel le poids moléculaire moyen en poids de l'élastomère thermoplastique à base de polyamide de la structure de pneumatique circulaire (17) s'inscrit à l'intérieur d'une plage qui va de 80000 à 160000.

12. Pneumatique (10, 200) selon la revendication 5, dans lequel le poids moléculaire moyen en poids de l'élastomère thermoplastique à base de polyamide de la structure de pneumatique circulaire (17) s'inscrit à l'intérieur d'une plage qui va de 131000 à 160000.

FIG. 1A

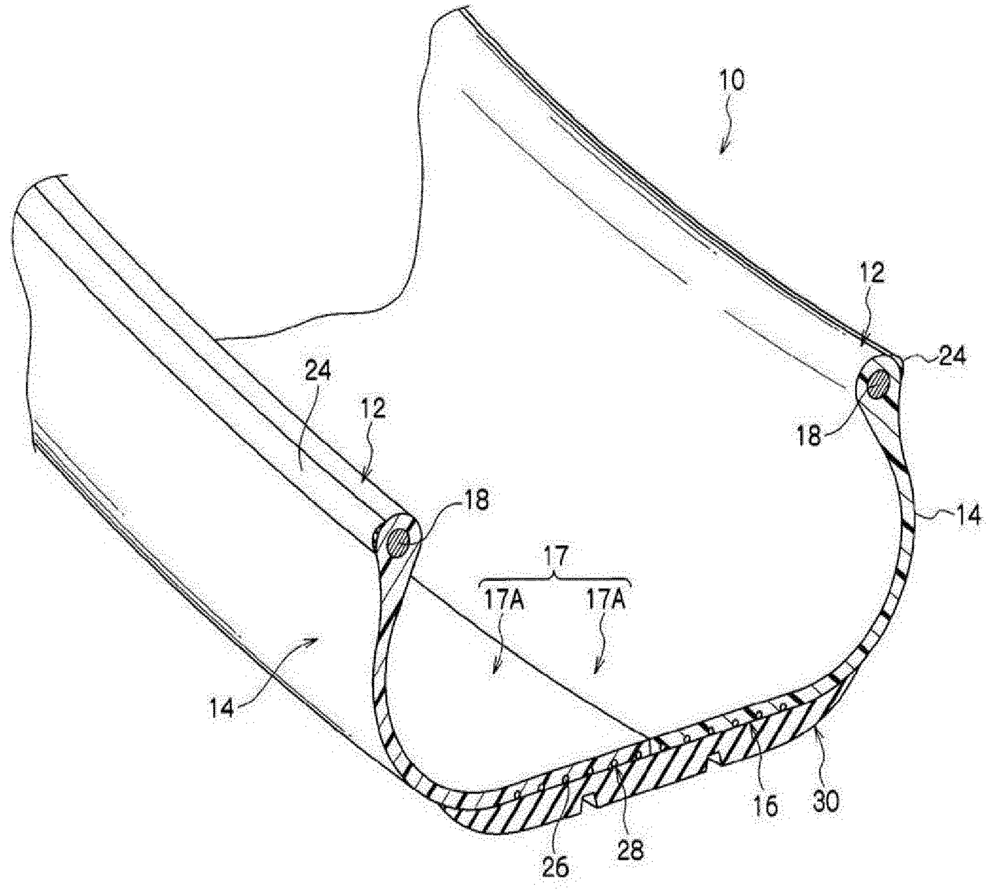


FIG. 1B

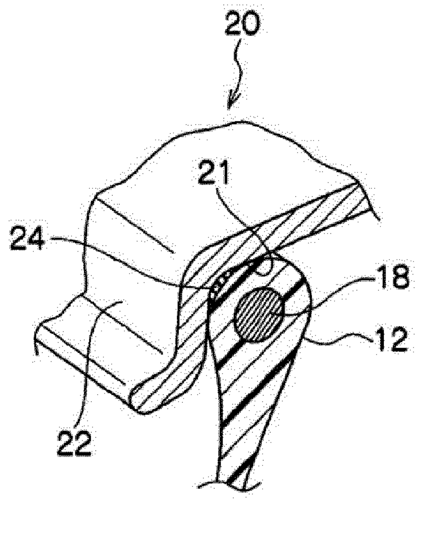

FIG. 2

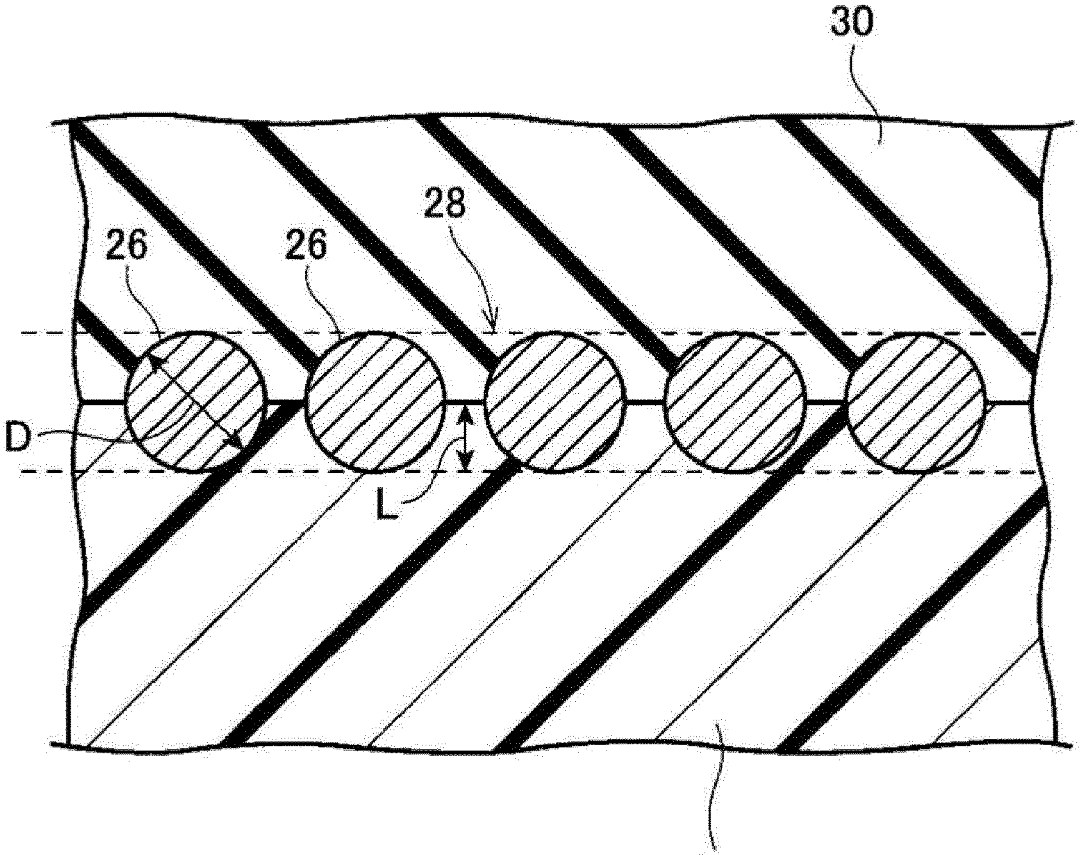

FIG. 3

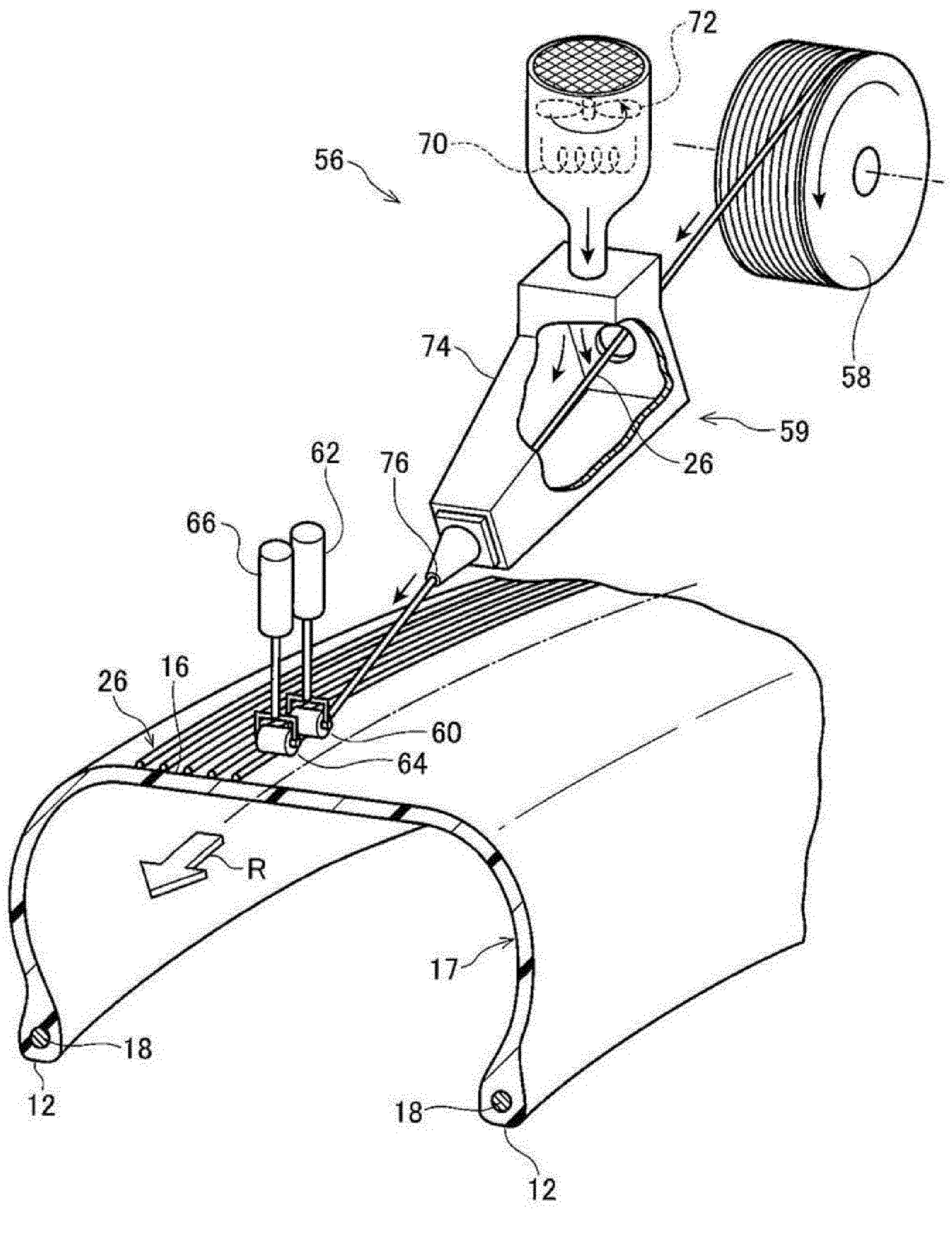

FIG. 4A

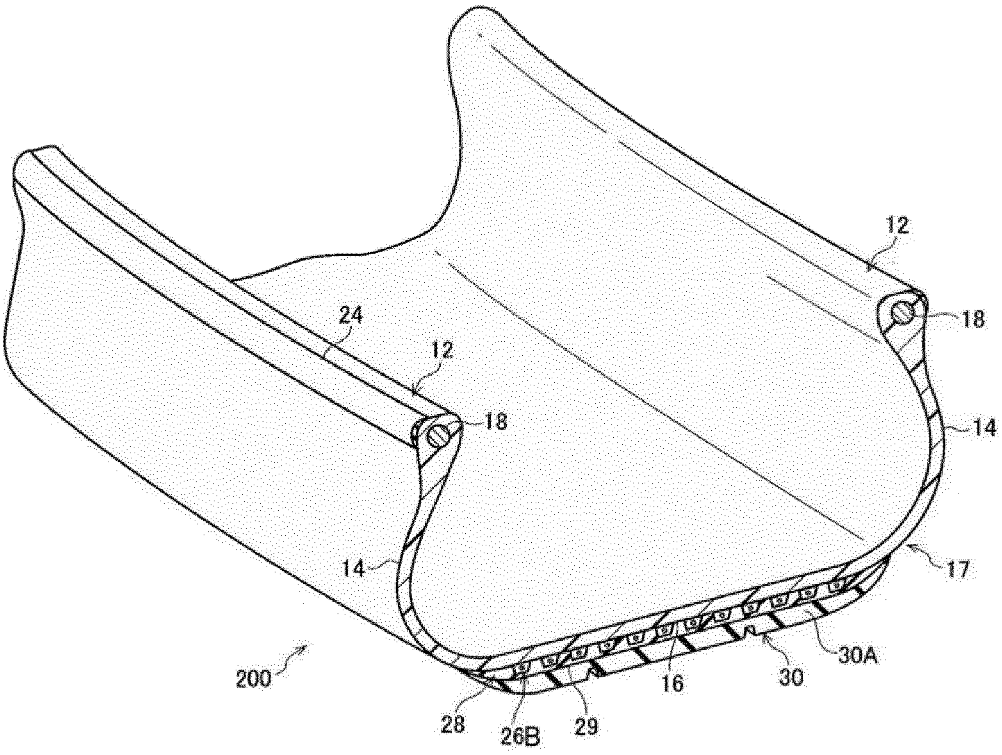


FIG. 4B

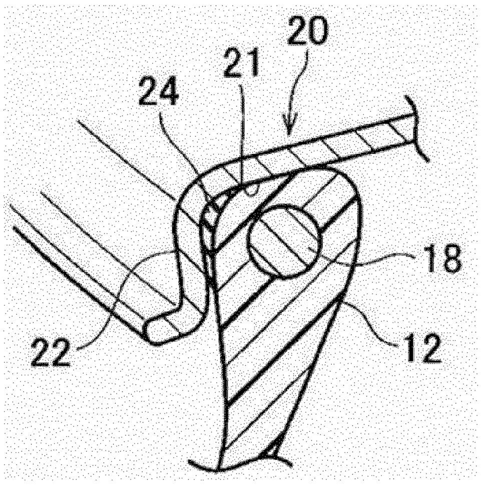

FIG. 5

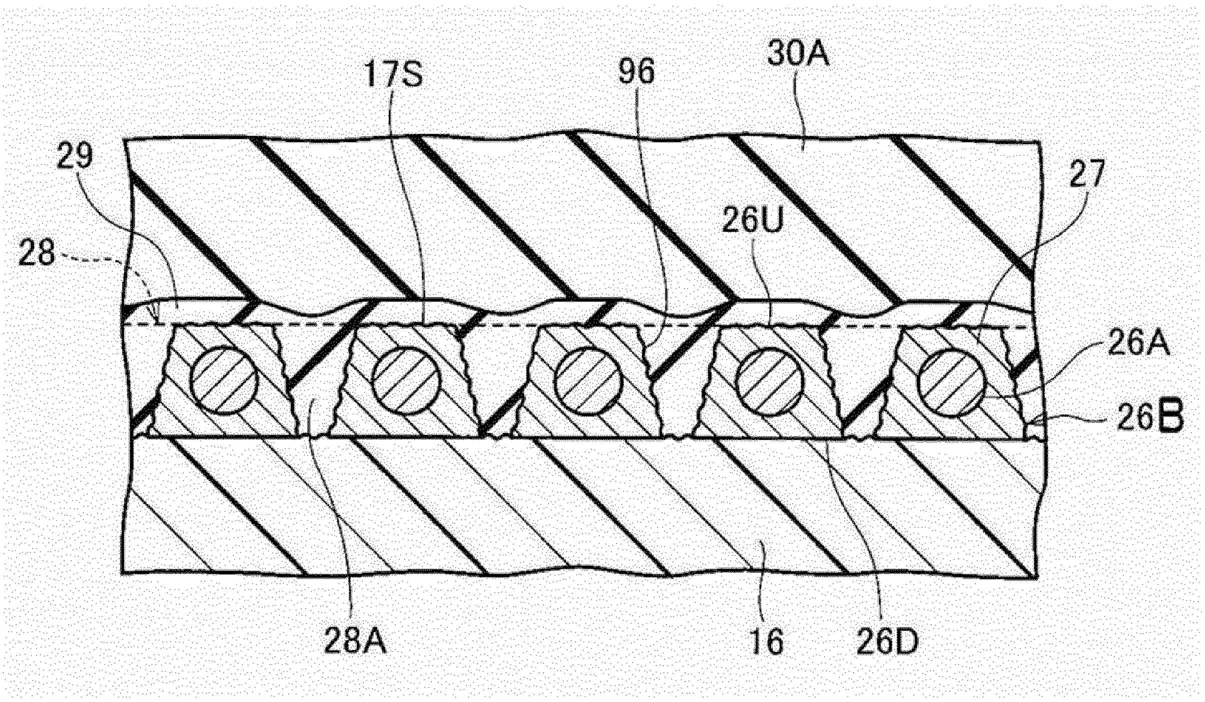

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046030 A
- JP 2014198518 A
- EP 3281966 A1